# EUROPEAN PATENT APPLICATION

(11) **EP 4 715 886 A1**
(43) Date of publication of application: **25.03.2026**
(21) Application number: 25192723.2
(22) Date of filing: 30.07.2025
(51) Int. Cl.: H01M 4/131, H01M 4/1391, H01M 10/0565, H01M 10/0567, H01M 10/0568

(54) **SECONDARY BATTERY, BATTERY PACK, AND VEHICLE**

(30) Priority: 19.09.2024 JP 2024162632
(71) Applicant: Kabushiki Kaisha Toshiba, Tokyo 105-0023 (JP)
(72) Inventor: UEDA, Kakuya, Minato-ku, Tokyo, 105-0023 (JP); KOITABASHI, Yuiko, Minato-ku, Tokyo, 105-0023 (JP); MURATA, Yoshiaki, Minato-ku, Tokyo, 105-0023 (JP); HARADA, Yasuhiro, Minato-ku, Tokyo, 105-0023 (JP); FUKAYA, Taro, Minato-ku, Tokyo, 105-0023 (JP)
(74) Representative: Hoffmann Eitle

(57) **Abstract**

In general, according to an approach, a secondary battery (100) includes a positive electrode (5), a negative electrode (3), and an electrolyte. The negative electrode (3) contains a niobium-containing oxide. In hard X-ray photoelectron spectroscopy on a surface of the negative electrode, a ratio B/A of an area B in a range of 680 eV or more and 695 eV or less to an area A in a range of 200 eV or more and 215 eV or less is 1.1 or more and 4.3 or less. The electrolyte contains a lithium salt and a first carboxylate ester. A content of the first carboxylate ester is 70 mass% or more and 95 mass% or less with respect to 100 mass% of the electrolyte excluding the lithium salt.

## Description

### FIELD

This disclosure relates generally to a secondary battery, a battery pack, and a vehicle.

### BACKGROUND

In general, it is preferable to increase the permittivity of an electrolytic solution. Use of an electrolytic solution having a high permittivity can improve input/output performance and low-temperature performance of the battery.

A carboxylate ester has a permittivity higher than that of a carbonate ester known as a solvent of an electrolyte. Therefore, use of an electrolyte containing a carboxylate ester has been studied. However, the carboxylate ester has a problem of being easily reductively decomposed at a low potential to generate a gas. Therefore, it has been mainly studied to use an electrolytic solution containing a carboxylate ester in combination with an electrode containing a lithium titanium oxide, which tends to have a high operating potential.

### BRIEF DESCRIPTION OF THE DRAWINGS

FIG. 1 is a cross-sectional view schematically showing an example of a secondary battery according to an approach.
FIG. 2 is an enlarged cross-sectional view of section A of the secondary battery shown in FIG. 1.
FIG. 3 is a partially cut-out perspective view schematically showing another example of the secondary battery according to an approach.
FIG. 4 is an enlarged cross-sectional view of section B of the secondary battery shown in FIG. 3.
FIG. 5 is a perspective view schematically showing an example of a battery module according to an approach.
FIG. 6 is an exploded perspective view schematically showing an example of a battery pack according to an approach.
FIG. 7 is a block diagram showing an example of an electric circuit of the battery pack shown in FIG. 6.
FIG. 8 is a partially see-through diagram schematically showing an example of a vehicle according to an approach.
FIG. 9 is a diagram schematically showing an example of a control system related to an electric system in the vehicle according to an approach.
FIG. 10 is a diagram showing an example of hard X-ray photoelectron spectroscopic spectra of a negative electrode of Example 1 and a negative electrode of Comparative Example 1.
FIG. 11 is a diagram showing another example of hard X-ray photoelectron spectroscopic spectra of a negative electrode of Example 1 and a negative electrode of Comparative Example 1.

### DETAILED DESCRIPTION

In general, according to an approach, a secondary battery is provided. The secondary battery includes a positive electrode, a negative electrode, and an electrolyte. The negative electrode contains a niobium-containing oxide. In hard X-ray photoelectron spectroscopy on a surface of the negative electrode, a ratio B/A of an area B in a range of 680 eV or more and 695 eV or less to an area A in a range of 200 eV or more and 215 eV or less is 1.1 or more and 4.3 or less. The electrolyte contains a lithium salt and a carboxylate ester represented by formula A.

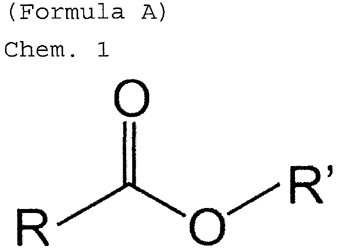

Each of R and R' contained in formula A is a hydrocarbon group. When a number of carbon atoms contained in R is represented by r and a number of carbon atoms contained in R' is represented by r', r and r' satisfy 5 ≤ (r + 1) + r' ≤ 8, and a value of |(r + 1) - r'| is 0 or 1. A content of the carboxylate ester is 70 mass% or more and 95 mass% or less with respect to 100 mass% of the electrolyte excluding the lithium salt.

In a secondary battery using an electrode containing an active material consisting of a lithium titanium oxide, an electrolytic solution containing a carboxylate ester can be used. When the electrolytic solution contains a large amount of a carboxylate ester, the proportion of a cyclic carbonate in the electrolytic solution can be reduced. In addition, a secondary battery containing an electrolytic solution containing a carboxylate ester can maintain a high output even after a charge and discharge cycle. However, the carboxylate ester is easily reductively decomposed at a low potential. When reductive decomposition of the carboxylate ester occurs, there is a problem that a gas is generated.

The electrode containing a niobium-containing oxide tends to have a low operating potential relative to the oxidation-reduction potential of lithium. Therefore, when an electrode containing a niobium-containing oxide is combined with an electrolyte containing a carboxylate ester, gas generation caused by reductive decomposition of the carboxylate ester easily proceeds. Therefore, in a secondary battery using an electrode containing a niobium-containing oxide, when an electrolyte containing a carboxylate ester is used for improving durability, a gas is easily generated, and thus there is a problem that charge and discharge cycle life performance is rather easily deteriorated.

### (First approach)

According to a first approach, a secondary battery is provided. The secondary battery includes a positive electrode, a negative electrode, and an electrolyte. The negative electrode contains a niobium-containing oxide. In hard X-ray photoelectron spectroscopy on the surface of the negative electrode, a ratio B/A of an area A in a range of 200 eV or more and 215 eV or less and an area B in a range of 680 eV or more and 695 eV or less is 1.1 or more and 4.3 or less. The electrolyte contains a lithium salt and a carboxylate ester represented by formula A.

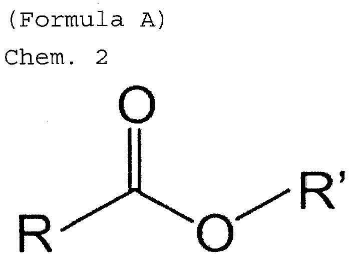

Each of R and R' contained in formula A is a hydrocarbon group. When the number of carbon atoms contained in R is represented by r and the number of carbon atoms contained in R' is represented by r', r and r' satisfy 5 ≤ (r + 1) + r' ≤ 8, and the value of |(r + 1) - r'| is 0 or 1. The content of the carboxylate ester is 70 mass% or more and 95 mass% or less with respect to 100 mass% of the electrolyte excluding the lithium salt.

In the present specification, the "carboxylate ester represented by formula A, in which when the number of carbon atoms contained in the hydrocarbon group R is represented by r, and the number of carbon atoms contained in the hydrocarbon group R' is represented by r', r and r' satisfy 5 ≤ (r + 1) + r' ≤ 8, and the value of |r + 1) - r'| is 0 or 1" may be referred to as a first carboxylate ester.

The electrolyte contains the first carboxylate ester.

r and r', which are the numbers of carbon atoms in the hydrocarbon groups R and R', respectively, included in formula A, satisfy 5 ≤ (r + 1) + r' ≤ 8. The smaller the number of (r + 1) + r', that is, the smaller the number of carbon atoms contained in the first carboxylate ester, the lower the viscosity of the first carboxylate ester tends to be. As a result, the viscosity of the electrolyte can be reduced, so that the ion conductivity can be improved, and thus, the above configuration is preferable. Since (r + 1) + r' is 8 or less, the first carboxylate ester contributes to improvement of ion conductivity of the electrolyte. In addition, when the number of (r + 1) + r' is large, that is, when the number of carbon atoms contained in the first carboxylate ester is large, the stability at a high temperature tends to be high. Since the (r + 1) + r' is 5 or more, the first carboxylate ester can improve the stability at a high temperature.

The fact that the value of |(r + 1) - r'| is 0 or 1 means that the structure of the carboxylate ester is symmetric or close to symmetric. In |(r + 1) - r'|, 1 contained in (r + 1) represents the number of carbon atoms that are bonded to R through a single bond and bonded to an oxygen atom through a double bond in formula A. That is, in |(r + 1) - r'|, (r + 1) is a value obtained by adding 1, which is the number of carbon atoms bonded to a hydrocarbon group R through a single bond and bonded to an oxygen atom through a double bond, to r, which is the number of carbon atoms contained in R. Note that "|(r + 1) - r'|" means an absolute value of "(r + 1) - r'".

The "symmetric" means that the value of the above (r+1) is equal to the number r' of carbon atoms contained in the hydrocarbon group R'. In other words, when the structure of the carboxylate ester is symmetric, the value of |(r + 1) - r'| is 0.

As the value of |(r + 1) - r'| increases, the structure of the carboxylate ester is farther from symmetry. It can be said that when |(r + 1) - r'| is 1, the structure of the carboxylate ester is close to symmetric. As the structure is closer to symmetric, that is, as the value of |(r + 1) - r'| is smaller, charge bias is less likely to occur in a carboxylate ester molecule. Therefore, the first carboxylate ester having a value of |(r + 1) - r'| of 0 or 1 tends to have a small permittivity because it is less likely to polarize.

The carboxylate ester is generally a substance having a relatively high permittivity. However, for the above reason, the first carboxylate ester has a relatively low permittivity among the carboxylate esters.

In an electrolyte containing a lithium salt and a carboxylate ester, the degree of dissociation of the lithium salt tends to decrease as the permittivity of the carboxylate ester decreases. Since the electrolyte contained in the secondary battery according to the approach contains the first carboxylate ester having a small permittivity, the degree of dissociation of the lithium salt in the electrolyte can be reduced.

As the degree of dissociation of the lithium salt in the electrolyte is lower, the reduction resistance of the lithium salt tends to decrease. Therefore, the lithium salt easily reacts with, for example, the negative electrode to be reductively decomposed. When reductive decomposition of the lithium salt occurs, a coating film can be formed on at least a part of the surface of the negative electrode.

The ratio B/A of the area A in a range of 200 eV or more and 215 eV or less and the area B in a range of 680 eV or more 695 eV or less in hard X-ray photoelectron spectroscopy (HAXPES) on the surface of the negative electrode can be an index of the degree of exposure of the niobium-containing oxide on the surface of the negative electrode.

For example, a small B/A can mean that the proportion of the niobium-containing oxide on the surface of the negative electrode is large. That is, it can mean that the degree of exposure of the niobium-containing oxide on the surface of the negative electrode is large.

On the other hand, a large B/A can mean that the proportion of the niobium-containing oxide on the surface of the negative electrode is small. For example, since the coating film is formed on at least a part of the surface of the negative electrode, it can mean that the degree of exposure of the niobium-containing oxide is small. Therefore, it is possible to prevent the carboxylate ester contained in the electrolyte and the niobium-containing oxide from coming into contact with each other and reacting with each other. Therefore, decomposition of the carboxylate ester can be prevented, so that gas generation can be prevented.

In the secondary battery according to the approach, B/A is 1.1 or more. Therefore, the exposure of the niobium-containing oxide on the surface of the negative electrode is prevented. Therefore, the decomposition of the carboxylate ester can be prevented. Since B/A is 4.3 or less, the amount of the coating film formed on the surface of the negative electrode is not excessively large. Therefore, the resistance can be kept low even after charging and discharging. Therefore, the charge and discharge cycle life can be improved.

The content of the first carboxylate ester is 70 mass% or more and 95 mass% or less with respect to 100 mass% of the electrolyte excluding the lithium salt. As the content of the first carboxylate ester in the electrolyte excluding the lithium salt is larger, the viscosity of the electrolyte can be reduced, and therefore there is a tendency that the low-temperature performance and the input/output performance can be improved. The content of the first carboxylate ester with respect to 100 mass% of the electrolyte excluding the lithium salt is 70 mass% or more, and therefore the low-temperature performance and the input/output performance can be improved. As the content of the first carboxylate ester in the electrolyte excluding the lithium salt is smaller, there is a tendency that the degree of dissociation of the lithium salt in the electrolyte can be improved. The content of the first carboxylate ester with respect to 100 mass% of the electrolyte excluding the lithium salt is 95 mass% or less, and therefore it is possible to prevent a decrease in cycle life caused by a decrease in the degree of dissociation of the lithium salt. The content of the first carboxylate ester is 70 mass% or more and 95 mass% or less with respect to 100 mass% of the electrolyte excluding the lithium salt, and therefore both high cycle life performance and high input/output performance can be achieved.

The secondary battery according to the approach will be further described.

The secondary battery according to the approach can be, for example, a lithium secondary battery. The secondary battery includes a nonaqueous electrolyte secondary battery containing a nonaqueous electrolyte.

An amount (a substance amount) Ml (mol) of the lithium salt in the electrolyte and an amount (a substance amount) Mc (mol) of the first carboxylate ester in the electrolyte satisfy 0.1 ≤ Ml/Mc ≤ 0.4. Ml/Mc within the above range is preferable, because the degree of dissociation of the lithium salt can be kept low.

The ratio C/B of an area C in a range of 290 eV or more and 295 eV or less to the area B in hard X-ray photoelectron spectroscopy on the surface of the negative electrode can be 0.2 or less. This will be described below.

The negative electrode can contain a binder described later. The binder can contain a fluorine atom. Examples of the binder containing a fluorine atom include polytetrafluoroethylene (PTFE), polyvinylidene fluoride (PVdF), and a fluororubber. The binder containing a fluorine atom can contain a C-F bond.

In HAXPES for the surface of the negative electrode, for example, a C1s peak attributed to a carbon atom contained in a C-F bond can be detected within a range of 290 eV or more and 295 eV or less.

That is, in a case where the negative electrode contains a binder containing a fluorine atom, the area C in a range of 290 eV or more and 295 eV or less can be relatively large. The relative size of the area C can be expressed by the ratio C/B of the area C to the area B in a range of 680 eV or more and 695 eV or less.

Therefore, in HAXPES on the surface of the negative electrode, the fact that the ratio C/B is higher than 0.2 can mean that many fluorine atoms present on the surface of the negative electrode are derived from the binder. On the contrary, in a case where the negative electrode does not contain a binder containing a fluorine atom, the ratio C/B can take a value close to 0. The ratio C/B may be, for example, 0.

A ratio C/B of 0.2 or less can mean that many fluorine atoms present on the surface of the negative electrode are derived from the coating film formed on the surface of the negative electrode. For example, it can mean that many fluorine atoms are derived from a large amount of lithium fluoride (LiF) that can be contained in the coating film. LiF is generated, for example, by reductive decomposition of the lithium salt, and can be contained on the surface of the negative electrode.

In HAXPES on the surface of the negative electrode included in the secondary battery according to the approach, C/B can be 0.2 or less. Therefore, it is possible to prevent the carboxylate ester contained in the electrolyte and the niobium-containing oxide from coming into contact with each other by the coating film. As a result, gas generation can be prevented.

In hard X-ray photoelectron spectroscopy on the surface of the negative electrode, for example, an Nb3d peak attributed to a niobium atom can be detected in the range of 200 eV or more and 215 eV or less. In the range of 680 eV or more and 695 eV or less, for example, an F1s peak attributed to a fluorine atom can be detected. That is, the ratio B/A of the area B in the range of 680 eV or more and 695 eV or less to the area A in the range of 200 eV or more and 215 eV or less can be an index indicating the degree of existence of fluorine atoms with respect to niobium atoms on the surface of the negative electrode. On the surface of the negative electrode, a fluorine atom can be contained, for example, in the coating film. On the surface of the negative electrode, a niobium atom can be contained, for example, in the niobium-containing oxide.

A large ratio B/A can mean that the degree of existence of fluorine atoms with respective to niobium atoms is large. That is, it can mean that the amount of the coating film formed on the surface of the negative electrode is large.

Conversely, a small ratio B/A can mean that the amount of the coating film formed on the surface of the negative electrode is small. In this case, the resistance can be reduced, which contributes to improvement of low-temperature performance.

Next, a secondary battery according to the approach will be described more specifically with reference to the drawings.

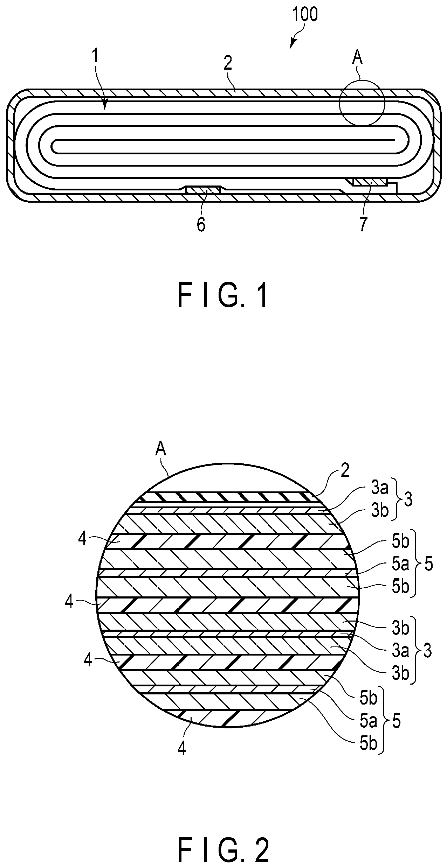

FIG. 1 is a cross-sectional view schematically showing an example of a secondary battery. FIG. 2 is an enlarged cross-sectional view of section A of the secondary battery shown in FIG. 1.

A secondary battery 100 shown in FIGS. 1 and 2 includes a bag-shaped container member 2 shown in FIG. 1, an electrode group 1 shown in FIGS. 1 and 2, and an electrolyte (not shown). The electrode group 1 and the electrolyte are housed in the bag-shaped container member 2. Then electrolyte (not shown) is held in the electrode group 1.

The bag-shaped container member 2 is made of a laminate film including two resin layers and a metal layer interposed therebetween.

As shown in FIG. 1, the electrode group 1 is a flat wound electrode group. As shown in FIG. 2, the flat wound electrode group 1 includes a negative electrode 3, a separator 4, and a positive electrode 5. The separator 4 is interposed between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 2. For the other portions of the negative electrode 3, negative electrode active material-containing layers 3b are formed on both surfaces of the negative electrode current collector 3a.

The positive electrode 5 includes a positive electrode current collector 5a and positive electrode active material-containing layers 5b formed on both surfaces thereof.

As shown in FIG. 1, a negative electrode terminal 6 and a positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by heat-sealing the resin layer.

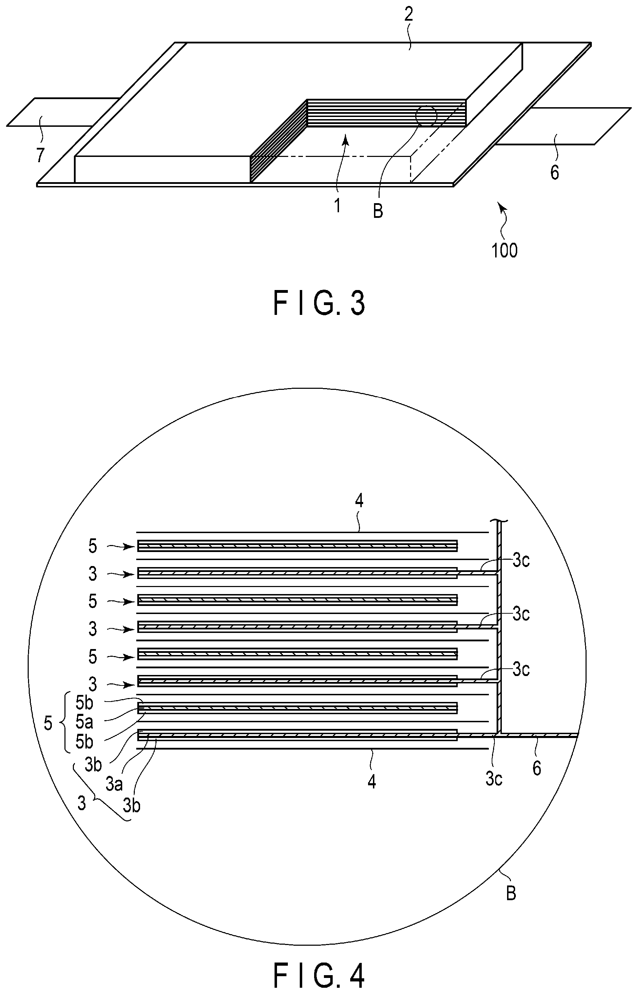

The secondary battery according to the approach is not limited to the secondary battery of the structure shown in FIGS. 1 and 2, and may be, for example, a battery of a structure shown in FIGS. 3 and 4.

FIG. 3 is a partially cut-out perspective view schematically showing another example of the secondary battery. FIG. 4 is an enlarged cross-sectional view of section B of the secondary battery shown in FIG. 3.

The secondary battery 100 shown in FIGS. 3 and 4 includes an electrode group 1 shown in FIGS. 3 and 4, a container member 2 shown in FIG. 3, and an electrolyte, which is not shown. The electrode group 1 and the electrolyte are housed in the container member 2. The electrolyte is held in the electrode group 1.

The container member 2 is made of a laminate film including two resin layers and a metal layer interposed therebetween.

As shown in FIG. 4, the electrode group 1 is a stacked electrode group. The stacked electrode group 1 has a structure in which negative electrodes 3 and positive electrodes 5 are alternately stacked with separator(s) 4 interposed therebetween.

The electrode group 1 includes a plurality of negative electrodes 3. Each of the negative electrodes 3 includes the negative electrode current collector 3a and the negative electrode active material-containing layers 3b supported on both surfaces of the negative electrode current collector 3a. The electrode group 1 further includes a plurality of positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at one end, a portion where the negative electrode active material-containing layer 3b is not supported on either surface. This portion serves as a negative electrode current collecting tab 3c. As shown in FIG. 4, the negative electrode current collecting tabs 3c do not overlap the positive electrodes 5. The negative electrode current collecting tabs 3c are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs 3c, the positive electrode current collecting tabs do not overlap the negative electrodes 3. Further, the positive electrode current collecting tabs are located on the opposite side of the electrode group 1 with respect to the negative electrode current collecting tabs 3c. The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

### (Production Method)

An example of a method for producing a secondary battery according to an approach includes preparing a positive electrode and a negative electrode, housing the positive electrode and the negative electrode in a container member, injecting an electrolyte into the container member, sealing the container member to obtain a battery precursor, and initially charging the battery precursor and then performing aging to obtain a secondary battery. After the aging, the gas in the battery may be removed.

The positive electrode can be fabricated, for example, by the following method. First, a positive electrode active material, a conductive agent, and a binder are suspended in a solvent to prepare a slurry. The slurry is applied to one surface or both surfaces of a positive electrode current collector. Subsequently, the applied slurry is dried to obtain a stack of a positive electrode active material-containing layer and a positive electrode current collector. Thereafter, the stack is pressed. In this way, the positive electrode is fabricated.

Alternatively, the positive electrode may be fabricated by the following method. First, a positive electrode active material, a conductive agent, and a binder are mixed to obtain a mixture. Then, the mixture is formed into pellets. Subsequently, these pellets are disposed on a positive electrode current collector, and thereby a positive electrode can be obtained.

The negative electrode can be fabricated, for example, by the following method. First, a negative electrode active material, a conductive agent, and a binder are suspended in a solvent to prepare a slurry. The slurry is applied to one surface or both surfaces of a negative electrode current collector. Subsequently, the applied slurry is dried to obtain a stack of a negative electrode active material-containing layer and a negative electrode current collector. Thereafter, the stack is pressed. In this way, the negative electrode is fabricated.

Alternatively, the negative electrode may be fabricated by the following method. First, a negative electrode active material, a conductive agent, and a binder are mixed to obtain a mixture. Then, the mixture is formed into pellets. Subsequently, these pellets are disposed on a negative electrode current collector, and thereby a negative electrode can be obtained.

A separator is disposed between the positive electrode and the negative electrode fabricated as described above to fabricate an electrode group. In the electrode group, a positive electrode terminal is electrically connected to the positive electrode, and a negative electrode terminal is electrically connected to the negative electrode.

An electrode group having positive and negative electrode terminals is housed in a bag-shaped container member made of a laminate film, and then, while leaving an opening for electrolyte injection, a portion other than the opening is sealed by heat-sealing. Subsequently, an electrolyte is injected into the bag-shaped container member from the opening, and the opening is sealed by heat-sealing. The heat-sealing may be performed under reduced pressure. Thus, a battery precursor is obtained.

Subsequently, the battery precursor is initially charged at room temperature (for example, 25°C), and then aged at a temperature equal to or higher than room temperature. The aging may be performed after discharging is performed after initial charging.

By undergoing initial charging and aging, decomposition of the lithium salt occurs, and as a result, a coating film can be formed on at least a part of the surface of the negative electrode. Specifically, a coating film can be formed on at least a part of the surface of the niobium-containing oxide. As a result, the proportion of the niobium-containing oxide on the surface of the negative electrode can become small. Therefore, the ratio B/A of the area B in the range of 680 eV or more and 695 eV or less to the area A in the range of 200 eV or more and 215 eV or less in HAXPES can be set within a range of 1.1 or more and 4.3 or less.

Details of the production conditions will be described below.

The aging can be performed, for example, in an environment of a temperature of 60°C or higher and 80°C or lower for 1 hour or more and 48 hours or less for a battery precursor whose battery voltage is set within a range of 2.8 V or more and 3.2 V or less by initial charging or discharging after initial charging. The battery voltage during aging may be within a range of 2.8 V or more and 3.0 V or less.

By performing initial charging, the potential of the negative electrode can be decreased. It is preferable that the potential of the negative electrode is decreased, because reductive decomposition of the lithium salt on the surface of the negative electrode can be made to easily proceed.

As the battery voltage during aging is increased, the temperature during aging is increased, or the aging time is increased, there is a tendency that decomposition of the lithium salt easily proceeds.

Hereinafter, the negative electrode, the positive electrode, and the nonaqueous electrolyte will be described. A separator, a container member, a positive electrode terminal, and a negative electrode terminal which can be included in the secondary battery of the approach in addition to these members will also be described below.

### (Negative Electrode)

The negative electrode can include a negative electrode current collector and a negative electrode active material-containing layer. The negative electrode active material-containing layer can be formed on one surface or both surfaces of the negative electrode current collector. The negative electrode active material-containing layer can contain a negative electrode active material, and optionally a conductive agent and a binder.

A coating film can be formed on at least a part of the surface of the negative electrode. The coating film can be included in the negative electrode. The coating film can contain, for example, a fluorine atom. The fluorine atom can be contained in the coating film, for example, as lithium fluoride (LiF). The coating film may exist on at least a part of the surface of the negative electrode active material-containing layer, or may cover at least a part of the surface of the negative electrode active material particles. The coating film can cover at least a part of the surface of the niobium-containing oxide. The coating film may be in the form of a film or a layer.

The coating film preferably contains lithium fluoride. The coating film containing lithium fluoride can effectively prevent reductive decomposition of the carboxylate ester on the surface of the negative electrode.

The negative electrode included in the secondary battery according to the approach can be changed from the negative electrode included in the battery precursor before being subjected to initial charging and aging. This is because, for example, after the battery precursor is assembled as described above, the negative electrode and the electrolyte can react during initial charging and aging. In this reaction, a coating film can be formed on at least a part of the surface of the negative electrode.

The niobium-containing oxide can be contained, for example, in the negative electrode active material-containing layer as the negative electrode active material. The negative electrode active material may further contain another negative electrode active material other than the niobium-containing oxide.

In the negative electrode containing the niobium-containing oxide, the lower limit of the operating potential can be reduced to 1 V (vs. Li/Li+) with respect to lithium. The upper limit of the operating potential can be, for example, 3 V. In the negative electrode having such a low potential, reductive decomposition of the electrolyte tends to easily occur. However, in a negative electrode in which the operating potential is too low, like a negative electrode in which the negative electrode active material is made of a carbon material, the reductive decomposition rate of the carboxylate ester is excessively high, and thus a gas is likely to be generated.

Examples of the niobium-containing oxide include niobium pentoxide (Nb₂O₅) and monoclinic niobium titanium oxide. The number of types of niobium-containing oxides can be one or two or more.

Examples of the monoclinic niobium titanium oxide include a compound represented by a general formula LiₓTi_{1-y}M1_{y}Nb_{2-z}M2_{z}O_{7+δ} and a compound represented by a general formula LiₓTi_{1-y}M3_{y+z}Nb_{2-z}O_{7-δ}. Here, M1 is at least one element selected from the group consisting of Zr, Si, and Sn. M2 is at least one element selected from the group consisting of V, Ta, Bi, K, Ca, B, Co, Fe, Mn, Ni, Si, P, and Mo. M3 is at least one element selected from the group consisting of Mg, Fe, Ni, Co, W, Ta, and Mo. The respective subscripts in the composition formula are specified as follows: 0 ≤ x ≤ 5, 0 ≤ y ≤ 1, 0 ≤ z < 2, and -0.3 ≤ δ ≤ 0.3. Specific examples of the monoclinic niobium titanium oxide represented by the general formula LiₓTi_{1-y}M1_{y}Nb_{2-z}M2_{z}O_{7+δ} include LiₓNb₂TiO₇ (0 ≤ x ≤ 5)_{.}

Examples of the negative electrode active material other than the niobium-containing oxide include lithium titanate having a ramsdellite structure (for example, Li_{2+y}Ti₃O₇, 0 ≤ y ≤ 3), lithium titanate having a spinel structure (for example, Li₄₊ₓTi₅O₁₂, 0 ≤ x ≤ 3), titanium dioxide (TiO₂), anatase titanium dioxide, rutile titanium dioxide, hollandite titanium composite oxide, and orthorhombic titanium composite oxide. The number of types of negative electrode active materials other than the niobium-containing oxide can be one or two or more.

Examples of the orthorhombic titanium-containing composite oxide include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb, and K. M^{II} is at least one selected from the group consisting of Zr, Sn, V, Nb, Ta, Mo, W, Y, Fe, Co, Cr, Mn, Ni, and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂Ti₆O₁₄ (0 ≤ a ≤ 6).

Examples of the orthorhombic titanium-containing composite oxide include a compound represented by Li₂₊ₐM^{I}_{2-b}Ti_{6-c}M^{II}_{d}O_{14+σ}. Here, M^{I} is at least one selected from the group consisting of Sr, Ba, Ca, Mg, Na, Cs, Rb, and K. M^{II} is at least one selected from the group consisting of Zr, Sn, V, Nb, Ta, Mo, W, Y, Fe, Co, Cr, Mn, Ni, and Al. The respective subscripts in the composition formula are specified as follows: 0 ≤ a ≤ 6, 0 ≤ b < 2, 0 ≤ c < 6, 0 ≤ d < 6, and -0.5 ≤ σ ≤ 0.5. Specific examples of the orthorhombic titanium-containing composite oxide include Li₂₊ₐNa₂Ti₆O₁₄ (0 ≤ a ≤ 6).

The conductive agent is added in order to enhance the current collection performance and to reduce the contact resistance between the negative electrode active material and the negative electrode current collector. Examples of the conductive agent include vapor grown carbon fibers (VGCFs), carbon blacks such as acetylene black, and carbonaceous materials such as graphite, carbon nanotubes, and carbon nanofibers. One of them may be used as the conductive agent, or two or more of them may be used in combination as the conductive agent. Alternatively, instead of using the conductive agent, a carbon coating or an electron conductive inorganic material coating may be applied to the surface of the negative electrode active material particle.

The binder is added in order to fill gaps among the dispersed negative electrode active material and also to bind the negative electrode active material and the negative electrode current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of these may be used as the binder, or alternatively, two or more may be used in combination as the binder.

The binder may contain a fluorine atom as described above. However, in HAXPES on the surface of the negative electrode, the ratio C/B is preferably 0.2 or less.

In the negative electrode active material-containing layer, the negative electrode active material, the conductive agent, and the binder are preferably blended in proportions of 68 mass% or more and 96 mass% or less, 2 mass% or more and 30 mass% or less, and 2 mass% or more and 30 mass% or less, respectively. When the amount of the conductive agent is 2 mass% or more, the current collection performance of the negative electrode active material-containing layer can be improved. When the amount of the binder is 2 mass% or more, the binding between the negative electrode active material-containing layer and the negative electrode current collector becomes sufficient, and excellent cycle performance can be expected. On the other hand, it is preferable that the content of each of the conductive agent and the binder is 30 mass% or less in view of increasing the capacity. Since the binder is an insulating component, the resistance of the negative electrode can be reduced by reducing the blending ratio in the negative electrode active material-containing layer to 30 mass% or less. Therefore, this contributes to improvement of output performance.

The density (not including the current collector) of the negative electrode active material-containing layer is preferably 2.0 g/cm³ or more and 3.2 g/cm³ or less. The negative electrode in which the density of the negative electrode active material-containing layer is within this range is excellent in energy density and ability of holding the electrolyte. The density of the negative electrode active material-containing layer is more preferably 2.2 g/cm³ or more and 3.0 g/cm³ or less.

As the negative electrode current collector, a material that is electrochemically stable at a potential at which lithium (Li) is inserted into and extracted from the negative electrode active material is used. For example, the negative electrode current collector is preferably made of copper, nickel, stainless steel, or aluminum, or an aluminum alloy containing one or more elements selected from Mg, Ti, Zn, Mn, Fe, Cu, and Si. The thickness of the negative electrode current collector is preferably 5 µm or more and 20 µm or less. The negative electrode current collector having such a thickness can maintain balance between the strength and the weight reduction of the negative electrode.

In addition, the negative electrode current collector can include a portion where the negative electrode active material-containing layer is not formed on the surface thereof. This portion can serve as a negative electrode current collecting tab.

### (Positive Electrode)

The positive electrode can include a positive electrode current collector and a positive electrode active material-containing layer. The positive electrode active material-containing layer can be formed on one surface or both surfaces of the positive electrode current collector. The positive electrode active material-containing layer can contain a positive electrode active material, and optionally a conductive agent and a binder.

As the positive electrode active material, for example, an oxide or a sulfide can be used. The positive electrode may contain one type of compound alone or two or more types of compounds in combination as the positive electrode active material. Examples of the oxide and the sulfide include compounds capable of having Li and Li ions inserted and extracted.

Examples of such compounds include manganese dioxide (MnO₂), iron oxides, copper oxides, nickel oxides, lithium manganese composite oxides (for example, LiₓMn₂O₄ or LiₓMnO₂; 0 < x ≤ 1), lithium nickel composite oxides (for example, LiₓNiO₂; 0 < x ≤ 1), lithium cobalt composite oxides (for example, LiₓCoO₂; 0 < x ≤ 1), lithium nickel cobalt composite oxides (for example, LiₓNi_{1-y}Co_{y}O₂; 0 < x ≤ 1, 0 < y < 1), lithium manganese cobalt composite oxides (for example, LiₓMn_{y}Co_{1-y}O₂; 0 < x ≤ 1, 0 < y < 1), lithium manganese nickel composite oxides having a spinel structure (for example, LiₓMn_{2-y}Ni_{y}O4; 0 < x ≤ 1, 0 < y < 2), lithium phosphates having an olivine structure (for example, LiₓFePO₄; 0 < x ≤ 1, LiₓFe_{r-y}Mn_{y}PO₄; 0 < x ≤ 1, 0 < y ≤ 1, and LiₓCoPO₄; 0 < x ≤ 1), iron sulfate (Fe₂(SO₄)₃), vanadium oxides (for example, V₂O₅), and lithium nickel cobalt manganese composite oxide (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (for example, LiₓMn₂O₄; 0 < x ≤ 1), lithium nickel composite oxides (for example, LiₓNiO₂; 0 < x ≤ 1), lithium cobalt composite oxides (for example, LiₓCoO₂; 0 < x ≤ 1), lithium nickel cobalt composite oxides (for example, LiₓNi_{1-y}Co_{y}O₂; 0 < x ≤ 1, 0 < y < 1), lithium manganese nickel composite oxides having a spinel structure (for example, LiₓMn_{2-y}Ni_{y}O₄; 0 < x ≤ 1, 0 < y < 2), lithium manganese cobalt composite oxides (for example, LiₓMn_{y}Co_{1-y}O₂; 0 < x ≤ 1, 0 < y < 1), lithium iron phosphates (for example, LiₓFePO₄; 0 < x ≤ 1), and lithium nickel cobalt manganese composite oxides (LiₓNi_{1-y-z}Co_{y}Mn_{z}O₂; 0 < x ≤ 1, 0 < y < 1, 0 < z < 1, y + z < 1). When these compounds are used for the positive electrode active material, the positive electrode potential can be increased.

In a case where an ambient temperature molten salt is used as the electrolyte of the battery, it is preferable to use a positive electrode active material containing a lithium iron phosphate, LiₓVPO₄F (0 ≤ x ≤ 1), a lithium manganese composite oxide, a lithium nickel composite oxide, a lithium nickel cobalt composite oxide, or a mixture thereof. Since these compounds have low reactivity with ambient temperature molten salts, the cycle life can be improved. Details regarding the ambient temperature molten salt will be described later.

The primary particle size of the positive electrode active material is preferably 100 nm or more and 1 µm or less. The positive electrode active material having a primary particle size of 100 nm or more is easy to handle during industrial production. In the positive electrode active material having a primary particle size of 1 µm or less, in-solid diffusion of lithium ions can proceed smoothly.

The specific surface area of the positive electrode active material is preferably from 0.1 m²/g to 10 m²/g. With the positive electrode active material having a specific surface area of 0.1 m²/g or more, sufficient sites for inserting and extracting Li ions can be ensured. The positive electrode active material having a specific surface area of 10 m²/g or less is easy to handle during industrial production, and can ensure a good charge and discharge cycle performance.

The binder is added in order to fill gaps among the dispersed positive electrode active material and also to bind the positive electrode active material and the positive electrode current collector. Examples of the binder include polytetrafluoroethylene (PTFE), polyvinylidene fluoride (PVdF), fluorine rubber, polyacrylate compounds, imide compounds, carboxymethyl cellulose (CMC), and salts of CMC. One of these may be used as the binder, or alternatively, two or more may be used in combination as the binder.

The conductive agent is added in order to enhance the current collection performance and to reduce the contact resistance between the positive electrode active material and the positive electrode current collector. Examples of the conductive agent include carbonaceous materials such as vapor grown carbon fibers (VGCFs), carbon blacks such as acetylene black, and graphite. One of them may be used as the conductive agent, or two or more of them may be used in combination as the conductive agent. The conductive agent can also be omitted.

In the positive electrode active material-containing layer, the positive electrode active material and the binder are preferably blended in proportions of 80 mass% or more and 98 mass% or less, and 2 mass% or more and 20 mass% or less, respectively.

When the amount of the binder is 2 mass% or more, a sufficient electrode strength can be achieved. The binder can serve as an electrical insulator. Thus, when the amount of the binder is 20 mass% or less, the amount of the electrical insulator in the electrode is reduced, and thereby the internal resistance can be decreased.

In a case where the conductive agent is added, the positive electrode active material, the binder, and the conductive agent are preferably blended in proportions of 77 mass% or more and 95 mass% or less, 2 mass% or more and 20 mass% or less, and 3 mass% or more and 15 mass% or less, respectively.

When the amount of the conductive agent is 3 mass% or more, the above-described effects can be exhibited. When the amount of the conductive agent is 15 mass% or less, the proportion of the conductive agent in contact with the electrolyte can be decreased. When this proportion is low, decomposition of the electrolyte can be reduced during storage under high temperatures.

The positive electrode current collector is preferably an aluminum foil, or an aluminum alloy foil containing one or more elements selected from Mg, Ti, Zn, Ni, Cr, Mn, Fe, Cu, and Si.

The thickness of the aluminum foil or the aluminum alloy foil is preferably 5 µm or more and 20 µm or less, and more preferably 15 µm or less. The purity of the aluminum foil is preferably 99 mass% or more. The content of a transition metal such as iron, copper, nickel, or chromium contained in the aluminum foil or the aluminum alloy foil is preferably 1 mass% or less.

The positive electrode current collector can include a portion where a positive electrode active material-containing layer is not formed on a surface thereof. This portion can serve as a positive electrode current collecting tab.

The positive electrode can be fabricated, for example, in the same manner as the negative electrode using a positive electrode active material.

### (Electrolyte)

As the electrolyte, for example, a liquid nonaqueous electrolyte or gel nonaqueous electrolyte can be used. The liquid nonaqueous electrolyte is prepared by dissolving an electrolyte salt as a solute in a solvent. The concentration of electrolyte salt is preferably 0.5 mol/kg or more and 2.5 mol/kg or less.

The lithium salt can be contained in the electrolyte as an electrolyte salt. The first carboxylate ester can be contained in the electrolyte as, for example, a solvent. The electrolyte may further contain an electrolyte salt other than the lithium salt, and may further contain a solvent other than the first carboxylate ester.

The composition of the electrolyte contained in the secondary battery of the approach, in particular, the concentration of the lithium salt can be changed from the composition (initial composition) of the electrolyte immediately after the preparation. This is because, for example, the lithium salt can be decomposed during initial charging, aging, and the like after assembling the battery precursor using the electrolyte immediately after preparation.

Examples of the lithium salt include lithium hexafluorophosphate (LiPF₆), lithium bis(trifluoromethanesulfonyl)imide (LiTFSI), lithium bis(fluorosulfonyl)imide (LiFSI), lithium bis(pentafluoroethylsulfonyl)imide (LiBETI), lithium tetrafluoroborate (LiBF₄), lithium difluoro(oxalato)borate (LiDFOB), lithium difluorophosphate (LiDFP), lithium arsenic hexafluoride (LiAsF₆), lithium trifluoromethanesulfonate (LiCF₃SO₃), lithium bistrifluoromethylsulfonylimide (LiN(CF₃SO₂)₂), and lithium perchlorate (LiClO₄). The number of types of lithium salts can be one or two or more. The lithium salt is preferably resistant to oxidation even at a high potential, and most preferably LiPF₆.

The lithium salt preferably contains a fluorine atom. The lithium salt containing a fluorine atom can be reductively decomposed, for example, during initial charging and/or aging. Therefore, in a case where the electrolyte contains a lithium salt containing a fluorine atom, a coating film containing lithium fluoride (LiF) can be formed on the surface of the negative electrode.

Preferable examples of the lithium salt containing a fluorine atom include lithium hexafluorophosphate (LiPF₆), lithium bis(trifluoromethanesulfonyl)imide (LiTFSI), lithium bis(fluorosulfonyl)imide (LiFSI), lithium bis(pentafluoroethylsulfonyl)imide (LiBETI), lithium tetrafluoroborate (LiBF₄), lithium difluoro(oxalato)borate (LiDFOB), and lithium difluorophosphate (LiDFP).

Examples of the first carboxylate ester that can be contained in an organic solvent include propyl propionate (PP), butyl butanoate, and ethyl propionate. The number of types of first carboxylate esters can be one or two or more.

Examples of the solvent other than the first carboxylate ester include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX); linear ethers such as dimethoxy ethane (DME) and diethoxy ethane (DEE); γ-butyrolactone (GBL), acetonitrile (AN), and sulfolane (SL). The number of types of other solvents can be one or two or more.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

As the nonaqueous electrolyte, other than the liquid nonaqueous electrolyte and the gel nonaqueous electrolyte, an ambient temperature molten salt (ionic melt) containing lithium ions, a polymer solid electrolyte, an inorganic solid electrolyte, or the like may be further contained.

The ambient temperature molten salt (ionic melt) refers to a compound which can exist in a liquid state at ambient temperature (15°C to 25°C) among organic salts made of combinations of organic cations and anions. The ambient temperature molten salt includes an ambient temperature molten salt which exists alone in a liquid state, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in a secondary battery is 25°C or lower. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity. Having Li ion conductivity, as referred to herein, indicates exhibiting a lithium ion conductivity of 1 × 10⁻⁶ S/cm or more at 25°C. Examples of the inorganic solid electrolyte include oxide solid electrolytes and sulfide solid electrolytes. Specific examples of the inorganic solid electrolyte are as described below.

As the oxide-based solid electrolyte, a lithium phosphate solid electrolyte having a NASICON (Sodium (Na) Super Ionic Conductor) structure and represented by a general formula Li₁₊ₓMα₂(PO₄)₃ is preferably used. Mα in the general formula is, for example, one or more selected from the group consisting of titanium (Ti), germanium (Ge), strontium (Sr), zirconium (Zr), tin (Sn), aluminum (Al), and calcium (Ca). The subscript x is within a range of 0 ≤ x ≤ 2.

Specific examples of the lithium phosphate solid electrolyte having a NASICON structure include a LATP compound represented by Li₁₊ₓAlₓTi₂₋ₓ(PO₄)₃ where 0.1 ≤ x ≤ 0.5; a compound represented by Li₁₊ₓAl_{y}M_{β2-y}(PO₄)₃ where Mβ is one or more selected from the group consisting of Ti, Ge, Sr, Zr, Sn, and Ca, 0 ≤ x ≤ 1, and 0 ≤ y ≤ 1; a compound represented by Li₁₊ₓAlₓGe₂₋ₓ(PO₄)₃ where 0 ≤ x ≤ 2; a compound represented by Li₁₊ₓAlₓZr₂₋ₓ(PO₄)₃ where 0 ≤ x ≤ 2; a compound represented by Li_{1+x+y}AlₓMγ₂₋ₓSi_{y}P_{3-y}O₁₂ where Mγ is one or more selected from the group consisting of Ti and Ge, 0 < x ≤ 2, and 0 ≤ y < 3; and a compound represented by Li₁₊₂ₓZr₁₋ₓCaₓ(PO₄)₃ where 0 ≤ x < 1.

In addition to the above lithium phosphate solid electrolyte, examples of the oxide solid electrolyte include an amorphous LIPON compound represented by LiₓPO_{y}N_{z} where 2.6 ≤ x ≤ 3.5, 1.9 ≤ y ≤ 3.8, and 0.1 ≤ z ≤ 1.3 (for example, Li_{2.9}PO_{3.3}N_{0.46}); a compound having a garnet structure represented by La₅₊ₓAₓLa₃₋ₓMδ₂O₁₂ where A is one or more selected from the group consisting of Ca, Sr, and Ba, Mδ is one or more selected from the group consisting of Nb and Ta, and 0 ≤ x ≤ 0.5; a compound represented by Li₃Mδ₂₋ₓL₂O₁₂ where Mδ is one or more selected from the group consisting of Nb and Ta, L may include Zr, and 0 ≤ x ≤ 0.5; a compound represented by Li₇₋₃ₓAlₓLa₃Zr₃O₁₂ where 0 ≤ x ≤ 0.5; a LLZ compound represented by Li₅₊ₓLa₃Mδ₂₋ₓZrₓO₁₂ where Mδ is one or more selected from the group consisting of Nb and Ta, and 0 ≤ x ≤ 2 (for example, Li₇La₃Zr₂O₁₂); and a compound having a perovskite structure and represented by La_{2/3-x}LiₓTiO₃ where 0.3 ≤ x ≤ 0.7.

One or more among the above compounds can be used as the solid electrolyte. Two or more of the above solid electrolytes may be used.

### (Separator)

The separator may be formed of, for example, a porous film or a synthetic resin nonwoven fabric containing polyethylene (PE), polypropylene (PP), cellulose, or polyvinylidene fluoride (PVdF). From the viewpoint of safety, it is preferable to use a porous film formed of polyethylene or polypropylene. This is because at a certain temperature, such a porous film melts and can thereby cut off current.

### (Container Member)

As the container member, for example, a container made of a laminate film or a container made of a metal can be used.

The thickness of the laminate film is, for example, 0.5 mm or less, and preferably 0.2 mm or less.

As the laminate film, a multilayer film including a plurality of resin layers and a metal layer interposed between the resin layers is used. The resin layer contains, for example, a polymeric material such as polypropylene (PP), polyethylene (PE), nylon, or polyethylene terephthalate (PET). The metal layer is preferably made of an aluminum foil or an aluminum alloy foil, so as to reduce weight. The laminate film can be formed into the shape of the container member by performing sealing through heat-sealing.

The wall thickness of the metal container is, for example, 1 mm or less, more preferably 0.5 mm or less, and still more preferably 0.2 mm or less.

The metal container is made of, for example, aluminum or an aluminum alloy. The aluminum alloy preferably contains an element such as magnesium, zinc, or silicon. In a case where the aluminum alloy contains a transition metal such as iron, copper, nickel, or chromium, the content thereof is preferably 100 mass ppm or less.

The shape of the container member is not particularly limited. The shape of the container member may be, for example, flat (thin), prismatic, cylindrical, coin-shaped, or button-shaped. The container member can be appropriately selected depending on the battery size and the use of the battery.

### (Negative Electrode Terminal)

The negative electrode terminal can be formed of a material which is electrically stable in a potential range of 1 V or more and 3 V or less (vs. Li/Li⁺) relative to the oxidation-reduction potential of lithium, and has electrical conductivity. Specifically, examples of the material of the negative electrode terminal include copper, nickel, stainless steel, aluminum, or an aluminum alloy containing at least one element selected from the group consisting of Mg, Ti, Zn, Mn, Fe, Cu, and Si. As the material of the negative electrode terminal, aluminum or an aluminum alloy is preferably used. The negative electrode terminal is preferably made of the same material as the negative electrode current collector in order to reduce contact resistance with the negative electrode current collector.

### (Positive Electrode Terminal)

The positive electrode terminal can be formed of a material which is electrically stable in a potential range of 3 V or more and 4.5 V or less (vs. Li/Li⁺) relative to the oxidation-reduction potential of lithium, and has electrical conductivity. Examples of the material of the positive electrode terminal include aluminum and an aluminum alloy containing at least one element selected from the group consisting of Mg, Ti, Zn, Mn, Fe, Cu, and Si. The positive electrode terminal is preferably formed of the same material as the positive electrode current collector in order to reduce contact resistance with the positive electrode current collector.

### (Measurement Method)

Measurement methods of the secondary battery according to the approach will be described below.

In a case where an electrode is measured and an electrode to be measured (for example, a negative electrode) is incorporated in a battery, the electrode to be measured is taken out from the battery as follows. First, a battery incorporating an electrode is disassembled in a glove box filled with argon. An electrode to be measured is taken out from the disassembled battery. The electrode is washed with a suitable solvent. As the solvent used for washing, for example, methyl ethyl carbonate or the like can be used. The washed electrode is dried under vacuum. Thus, a measurement electrode is obtained.

In a case where an electrolyte is measured, a battery is disassembled in a glove box filled with argon in the same manner as described above. Thereafter, the electrolyte is collected with a pipette or the like. In a case where it is difficult to collect the electrolyte with a pipette or the like, the electrolyte may be extracted with a solvent such as super-dehydrated acetonitrile. Thus, a measurement electrolyte is obtained.

### (Composition Analysis of Electrolyte)

The type and content of a substance contained in the electrolyte can be analyzed by ion chromatography. Since the structure of the substance can also be specified by specifying the type of the substance, r and r' of the carboxylate ester contained in the electrolyte can be specified. As the ion chromatography, gas chromatography can be used.

The measurement electrolyte obtained as described above is diluted with acetonitrile to a volume of 20 times and used as a measurement sample. The measurement sample is subjected to gas chromatography mass spectrometry (GC-MS) measurement under conditions shown in Table 1.

**Table 1**

| Apparatus | Item | Conditions |
|---|---|---|
| GC | Injection amount | 1 uL |
| | Column | Ultra Alloy CW 40 m 0.25 mm 0.25 µm |
| | Temperature | 40°C (held for 2 minutes), 10°C/min temperature rise, 240°C (10 min) |
| | Split ratio | 1:50 |
| | He temperature | 1.0 mL/min |
| MS | Mass range | 10 to 600 m/z |

The content (mass%) of the carboxylate ester with respect to the electrolyte excluding the lithium salt can be measured as follows. First, the contents of lithium ions, anions corresponding to the lithium ions, and carboxylate esters in the electrolyte are measured by the above method. The content of lithium ions and anions corresponding to the lithium ions corresponds to the content of the lithium salt contained in the electrolyte. Therefore, the amount of the electrolyte excluding the lithium salt can be calculated by subtracting the content of the lithium salt from the amount of the electrolyte. The mass percent concentration of the carboxylate ester when the "amount of the electrolyte excluding the lithium salt" calculated in this manner is taken as 100 mass% can be calculated as the "content of the carboxylate ester with respect to 100 mass% of the electrolyte excluding the lithium salt". That is, "excluding the lithium salt" actually means that excluding (subtracting) the amount (mass) of the lithium salt from the amount (mass) of the electrolyte in order to set a reference value in the calculation of the formulation for the electrolyte containing the lithium salt. In other words, "content of the carboxylate ester with respect to 100 mass% of the electrolyte excluding the lithium salt" may mean that a content of the carboxylate ester with respect to an amount obtained by subtracting the mass of the lithium salt from the mass of the electrolyte.

### (HAXPES Analysis)

An analysis by HAXPES can be performed as follows.

A measurement electrode (for example, a negative electrode) taken out by the above method is attached to a sample holder of HAXPES with a carbon tape in a glove box filled with argon. The sample holder is placed in a transfer vessel, sealed, taken out of the glove box together with the vessel, and attached to a sample inlet of a HAXPES apparatus. By transferring the sample holder in the apparatus, the measurement electrode is introduced into the apparatus without exposure to the atmosphere. An analysis of HAXPES is performed as follows. The energy is calibrated with Au4f7/2 (5870 eV), and then the measurement is performed. The excitation energy is 5956.01 eV. The beam size is 20 µm long × 30 µm wide. The electronic analyzer (Scienta Omicron R4000 L1) is set to 10 keV. The photoelectron detection angle is an oblique incident angle at about 88.5°. Charge neutralization is not used.

The background is subtracted from the results obtained by the above analysis.

Background subtraction and area calculation can be performed using the Shirley method. For example, when the area A in a range of 200 eV or more and 215 eV or less is measured, the background is subtracted using the Shirley method for the binding energy in a range of 200 eV or more and 215 eV or less in the HAXPES analysis result. After subtraction of the background, a chart in which the normalized intensity is plotted on the vertical axis and the binding energy (unit: eV) is plotted on the horizontal axis is obtained. This chart is defined as a HAXPES spectrum. In the HAXPES spectrum, a range in which the binding energy is 200 eV or more and 215 eV or less is integrated as an integration range. In this manner, the area A is measured.

The area B and the area C can also be measured from the HAXPES spectrum obtained in the same manner as described above. However, the range of the binding energy used for the integration range in the subtraction of the background and the area measurement is changed to a range of 680 eV or more and 695 eV or less in the measurement of the area B and a range of 290 eV or more and 295 eV or less in the measurement of the area C.

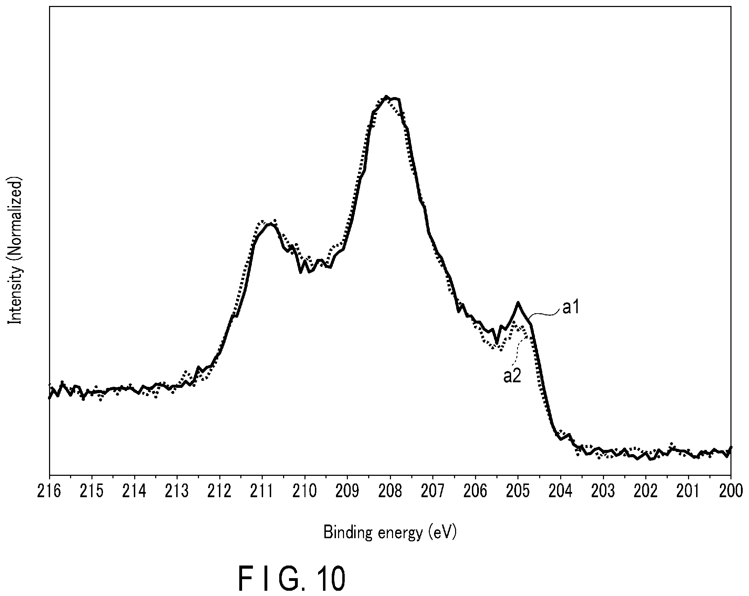

An example of the HAXPES spectrum obtained by the method described above is shown in FIG. 10. FIG. 10 shows a range of a binding energy of 200 eV or more and 216 eV or less. In FIG. 10, reference sign a1 denotes a HAXPES spectrum for the negative electrode of Example 1, and reference sign a2 denotes a HAXPES spectrum for the negative electrode of Comparative Example 1, each obtained by performing the above-described HAXPES and background subtraction.

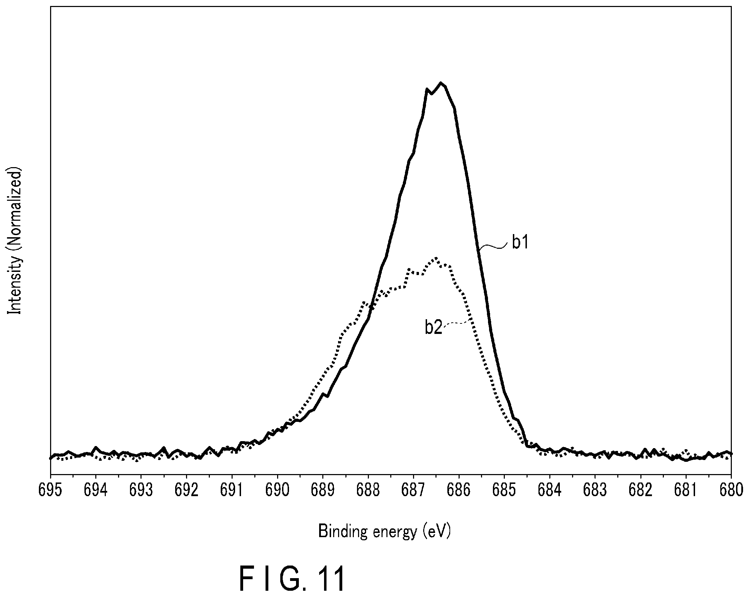

In addition, another example of a HAXPES spectrum obtained by the method described above is shown in FIG. 11. FIG. 11 shows a range of a binding energy of 680 eV or more and 695 eV or less. In FIG. 11, reference sign b1 denotes a HAXPES spectrum for the negative electrode of Example 1, and reference sign b2 denotes a HAXPES spectrum for the negative electrode of Comparative Example 1, each obtained by performing the above-described HAXPES and background subtraction.

That is, the area within the range of 200 eV or more and 215 eV or less of the spectrum a1 in FIG. 10 corresponds to the area A for Example 1. In FIG. 11, the area within the range of 680 eV or more and 695 eV or less of the spectrum b1 corresponds to the area B for Example 1. From this, the ratio B/A for Example 1 can be calculated. Similarly, the area A, the area B, and the ratio B/A for Comparative Example 1 can be calculated from the area within the range of 200 eV or more and 215 eV or less of the spectrum a2 in FIG. 10 and the area within the range of 680 eV or more and 695 eV or less of the spectrum b2 in FIG. 11.

As is clear from FIGS. 10 and 11, the difference in area between the spectrum a1 and the spectrum a2 is relatively small within the range of 200 eV or more and 215 eV or less. On the other hand, within the range of 680 eV or more and 695 eV or less, the area of the spectrum b2 is significantly smaller than that of the spectrum b1. That is, it is clear from FIGS. 10 and 11 that the ratio B/A in Example 1 is larger than the ratio B/A in Comparative Example 1.

According to the first approach, a secondary battery is provided. The secondary battery includes a positive electrode, a negative electrode, and an electrolyte. The negative electrode contains a niobium-containing oxide. In hard X-ray photoelectron spectroscopy on the surface of the negative electrode, a ratio B/A of an area A in a range of 200 eV or more and 215 eV or less and an area B in a range of 680 eV or more and 695 eV or less is 1.1 or more and 4.3 or less. The electrolyte contains a lithium salt and a carboxylate ester represented by formula A.

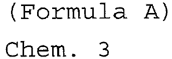

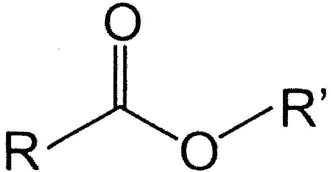

Each of R and R' contained in formula A is a hydrocarbon group. When the number of carbon atoms contained in R is represented by r and the number of carbon atoms contained in R' is represented by r', r and r' satisfy 5 ≤ (r + 1) + r' ≤ 8, and the value of |(r + 1) - r'| is 0 or 1. The content of the carboxylate ester is 70 mass% or more and 95 mass% or less with respect to 100 mass% of the electrolyte excluding the lithium salt. Therefore, a secondary battery having an excellent charge and discharge cycle life can be realized.

### (Second Approach)

According to a second approach, a battery module is provided. The battery module includes a plurality of secondary batteries according to the first approach.

In the battery module, each of the unit cells may be arranged to be electrically connected in series or in parallel, or may be arranged in combination of in-series connection and in-parallel connection.

Next, an example of the battery module according to the approach will be described with reference to the drawings.

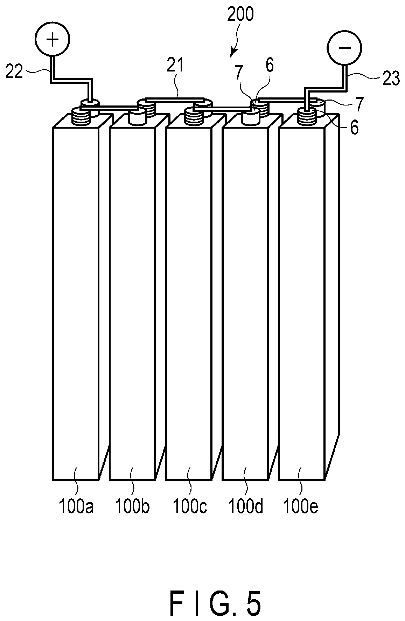

FIG. 5 is a perspective view schematically showing an example of the battery module. A battery module 200 shown in FIG. 5 includes five unit cells 100a to 100e, four bus bars 21, a positive electrode-side lead 22, and a negative electrode-side lead 23. Each of the five unit cells 100a to 100e is the secondary battery according to the first approach.

The bus bar 21 connects, for example, a negative electrode terminal 6 of one unit cell 100a and a positive electrode terminal 7 of the unit cell 100b positioned adjacent. In such a manner, five unit cells 100 are thus connected in series by the four bus bars 21. That is, the battery module 200 shown in FIG. 5 is a battery module of five-in-series connection. Although no example is depicted in drawings, in a battery module including a plurality of unit cells that are electrically connected in parallel, for example, the unit cells can be electrically connected by having a plurality of negative electrode terminals being connected to each other by bus bars while having a plurality of positive electrode terminals being connected to each other by bus bars.

The positive electrode terminal 7 of at least one cell among the five unit cells 100a to 100e is electrically connected to the positive electrode-side lead 22 for external connection. In addition, the negative electrode terminal 6 of at least one cell among the five unit cells 100a to 100e is electrically connected to the negative electrode-side lead 23 for external connection.

The battery module according to the second approach includes the secondary battery according to the first approach. Therefore, the charge and discharge cycle life performance can be improved.

### (Third Approach)

According to a third approach, a battery pack is provided. The battery pack includes a battery module according to the second approach. The battery pack may include a single secondary battery according to the first approach, in place of the battery module according to the second approach.

The battery pack can further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

Moreover, the battery pack can further include an external power distribution terminal. The external power distribution terminal is configured to externally output current from the secondary battery, and/or to input external current into the secondary battery. In other words, when the battery pack is used as a power source, current is externally supplied via the external power distribution terminal. When the battery pack is charged, a charge current (including regenerative energy of the motive force of a vehicle such as an automobile) is supplied to the battery pack via the external power distribution terminal.

Next, an example of the battery pack according to the approach will be described with reference to the drawings.

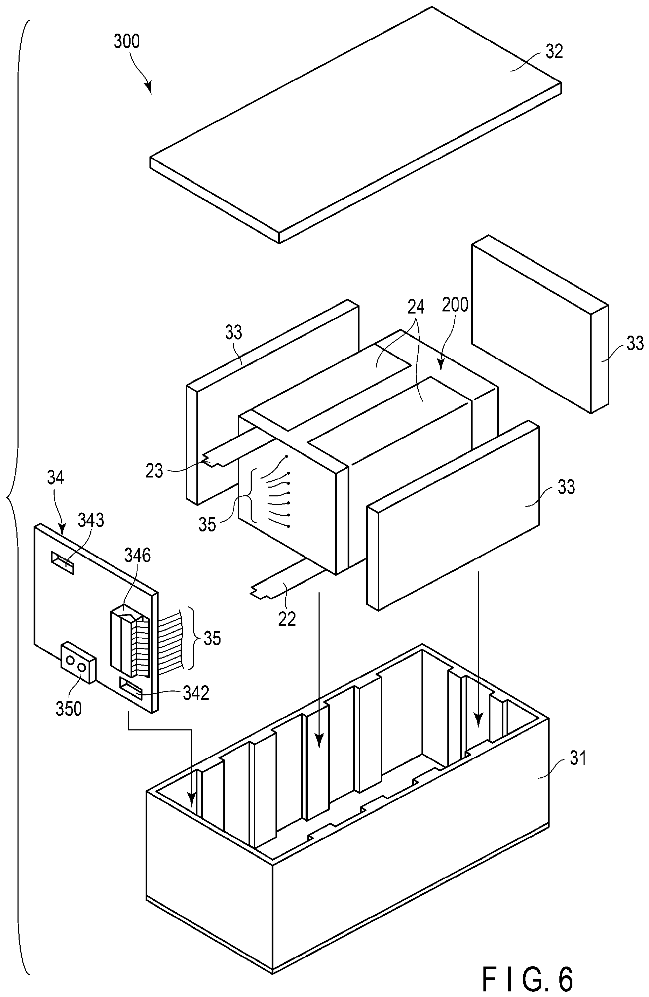

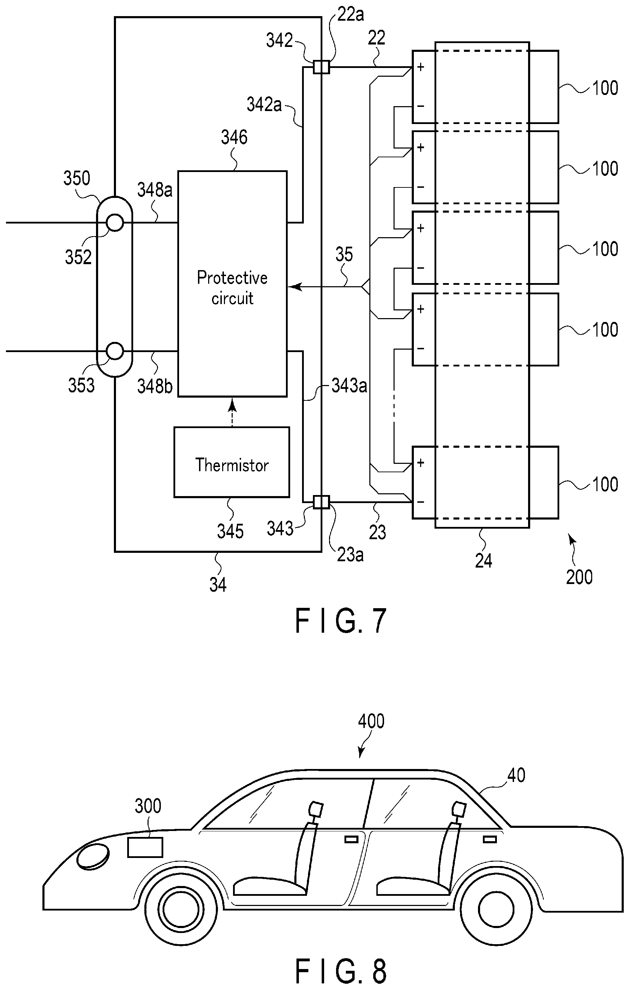

FIG. 6 is an exploded perspective view schematically showing an example of the battery pack. FIG. 7 is a block diagram showing an example of an electric circuit of the battery pack shown in FIG. 6.

A battery pack 300 shown in FIGS. 6 and 7 includes a housing container 31, a lid 32, protective sheets 33, a battery module 200, a printed wiring board 34, wires 35, and an insulating plate (not shown).

The housing container 31 shown in FIG. 6 is a prismatic bottomed container having a rectangular bottom surface. The housing container 31 is configured to be able to house the protective sheets 33, the battery module 200, the printed wiring board 34, and the wires 35. The lid 32 has a rectangular shape. The lid 32 covers the housing container 31 to house the battery module 200 and such. Although not illustrated, the housing container 31 and the lid 32 are provided with openings, connection terminals, or the like for connection to an external device or the like.

The battery module 200 includes a plurality of unit cells 100, a positive electrode-side lead 22, a negative electrode-side lead 23, and adhesive tapes 24.

At least one of the unit cells 100 is the secondary battery according to the first approach. The unit cells 100 are electrically connected in series as shown in FIG. 7. The unit cells 100 may be electrically connected in parallel, or connected in a combination of in-series connection and in-parallel connection. If the unit cells 100 are connected in parallel, the battery capacity increases as compared to a case where they are connected in series.

The adhesive tapes 24 fasten the unit cells 100. The unit cells 100 may be fixed using a heat shrinkable tape in place of the adhesive tapes 24. In this case, the protective sheets 33 are arranged on both side surfaces of the battery module 200, and the heat shrinkable tape is wound around the battery module 200 and the protective sheets 33, and then, the heat shrinkable tape is shrunk by heating to bundle the unit cells 100.

One end of the positive electrode-side lead 22 is connected to the battery module 200. The one end of the positive electrode-side lead 22 is electrically connected to the positive electrode(s) of one or more unit cells 100. One end of the negative electrode-side lead 23 is connected to the battery module 200. The one end of the negative electrode-side lead 23 is electrically connected to the negative electrode(s) of one or more unit cells 100.

The printed wiring board 34 is provided along one face in the short side direction among the inner side surfaces of the housing container 31. The printed wiring board 34 includes a positive electrode-side connector 342, a negative electrode-side connector 343, a thermistor 345, a protective circuit 346, wirings 342a and 343a, an external power distribution terminal 350, a plus-side wiring (positive-side wiring) 348a, and a minus-side wiring (negative-side wiring) 348b. One principal surface of the printed wiring board 34 faces a side surface of the battery module 200. An insulating plate (not shown) is disposed between the printed wiring board 34 and the battery module 200.

The other end 22a of the positive electrode-side lead 22 is electrically connected to the positive electrode-side connector 342. The other end 23a of the negative electrode-side lead 23 is electrically connected to the negative electrode-side connector 343.

The thermistor 345 is fixed to one principal surface of the printed wiring board 34. The thermistor 345 detects the temperature of each unit cell 100 and transmits the detection signal to the protective circuit 346.

The external power distribution terminal 350 is fixed to the other principal surface of the printed wiring board 34. The external power distribution terminal 350 is electrically connected to a device that exists outside the battery pack 300. The external power distribution terminal 350 includes a positive-side terminal 352 and a negative-side terminal 353.

The protective circuit 346 is fixed to the other principal surface of the printed wiring board 34. The protective circuit 346 is connected to the positive-side terminal 352 via the plus-side wiring 348a. The protective circuit 346 is connected to the negative-side terminal 353 via the minus-side wiring 348b. In addition, the protective circuit 346 is electrically connected to the positive electrode-side connector 342 via the wiring 342a. The protective circuit 346 is electrically connected to the negative electrode-side connector 343 via the wiring 343a. Furthermore, the protective circuit 346 is electrically connected to each of the unit cells 100 via the wires 35.

The protective sheets 33 are arranged on both inner surfaces of the housing container 31 along the long side direction and on the inner side surface along the short side direction facing the printed wiring board 34 across the battery module 200. The protective sheets 33 are made of, for example, a resin or rubber.

The protective circuit 346 controls charging and discharging of the unit cells 100. The protective circuit 346 is also configured to cut-off electric connection between the protective circuit 346 and the external power distribution terminal 350 (positive-side terminal 352, negative-side terminal 353) to an external device, based on a detection signal transmitted from the thermistor 345 or a detection signal transmitted from each unit cell 100 or the battery module 200.

An example of the detection signal transmitted from the thermistor 345 is a signal indicating that the temperature of the unit cell(s) 100 is detected to be a predetermined temperature or higher. An example of the detection signal transmitted from each unit cell 100 or the battery module 200 include a signal indicating detection of over-charge, over-discharge, and overcurrent of the unit cell(s) 100. In a case of detecting over-charge or the like for each of the unit cells 100, the battery voltage may be detected, or a positive electrode potential or a negative electrode potential may be detected. In the latter case, a lithium electrode used as a reference electrode is inserted into each unit cell 100.

Note that as the protective circuit 346, a circuit included in a device (for example, an electronic device or an automobile) that uses the battery pack 300 as a power source may be used.

As described above, the battery pack 300 includes the external power distribution terminal 350. Hence, the battery pack 300 can output current from the battery module 200 to an external device and input current from an external device to the battery module 200 via the external power distribution terminal 350. In other words, when using the battery pack 300 as a power source, the current from the battery module 200 is supplied to an external device via the external power distribution terminal 350. When charging the battery pack 300, a charge current from an external device is supplied to the battery pack 300 via the external power distribution terminal 350. If the battery pack 300 is used as an onboard battery, the regenerative energy of the motive force of a vehicle can be used as the charge current from the external device.

Note that the battery pack 300 may include a plurality of battery modules 200. In this case, the battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may respectively be used as the positive-side terminal 352 and the negative-side terminal 353 of the external power distribution terminal 350.

Such a battery pack is used, for example, in applications where excellent cycle performance is demanded when a large current is extracted. More specifically, the battery pack is used as, for example, a power source for electronic devices, a stationary battery, or an onboard battery for various types of vehicles. An example of the electronic device is a digital camera. The battery pack is particularly favorably used as an onboard battery.

The battery pack according to the third approach is provided with the secondary battery according to the first approach or the battery module according to the second approach. Therefore, the charge and discharge cycle life performance can be improved.

### (Fourth Approach)

According to a fourth approach, a vehicle is provided. The vehicle has the battery pack according to the third approach installed therein.

In the vehicle, the battery pack is configured, for example, to recover regenerative energy of the motive force of the vehicle. The vehicle may include a mechanism (a regenerator) configured to convert kinetic energy of the vehicle into regenerative energy.

Examples of the vehicle include two-wheeled to four-wheeled hybrid electric automobiles, two-wheeled to four-wheeled electric automobiles, electrically assisted bicycles, and railway cars.

The installing position of the battery pack within the vehicle is not particularly limited. For example, when installing the battery pack in an automobile, the battery pack can be installed in an engine compartment of the vehicle, in a rear part of the vehicle body, or under a seat.

The vehicle may have a plurality of battery packs installed therein. In such a case, batteries included in each of the battery packs may be electrically connected in series, electrically connected in parallel, or electrically connected in a combination of in-series connection and in-parallel connection. For example, in a case where each battery pack includes a battery module, the battery modules may be electrically connected in series, electrically connected in parallel, or electrically connected in a combination of in-series connection and in-parallel connection. Alternatively, in a case where each battery pack includes a single battery, the batteries may be electrically connected in series, electrically connected in parallel, or electrically connected in a combination of in-series connection and in-parallel connection.

Next, an example of the vehicle according to the approach will be described with reference to the drawings.

FIG. 8 is a partially see-through diagram schematically showing an example of the vehicle.

A vehicle 400 shown in FIG. 8 includes a vehicle body 40 and a battery pack 300 according to the third approach. In the example shown in FIG. 8, the vehicle 400 is a four-wheeled automobile.

This vehicle 400 may have a plurality of battery packs 300 installed therein. In such a case, the batteries (for example, unit cells or battery module) included in the battery packs 300 may be connected in series, connected in parallel, or connected in a combination of in-series connection and in-parallel connection.

FIG. 8 shows an example in which the battery pack 300 is installed in an engine compartment located at the front of the vehicle body 40. As described above, for example, the battery pack 300 may be installed in a rear part of the vehicle body 40, or under a seat. The battery pack 300 can be used as a power source of the vehicle 400. The battery pack 300 can also recover regenerative energy of the motive force of the vehicle 400.

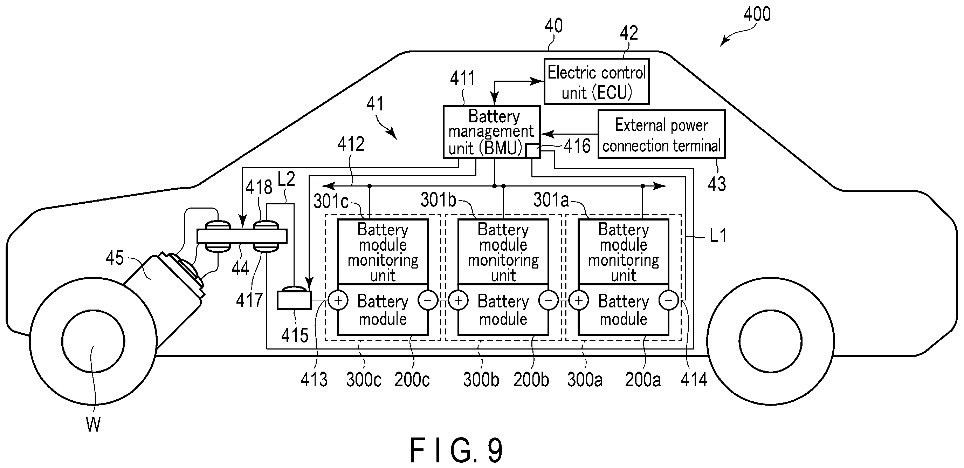

Next, with reference to FIG. 9, an aspect of operation of the vehicle according to the approach will be described.

FIG. 9 is a diagram schematically showing an example of a control system related to an electric system in the vehicle. A vehicle 400 shown in FIG. 9 is an electric automobile.

The vehicle 400 shown in FIG. 9 includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in an engine compartment, in a rear part of the automobile body, or under a seat. In FIG. 9, the position of the vehicle power source 41 installed in the vehicle 400 is schematically shown.

The vehicle power source 41 includes a plurality of (for example, three) battery packs 300a, 300b and 300c, a battery management unit (BMU) 411, and a communication bus 412.

The battery pack 300a includes a battery module 200a and a battery module monitoring unit 301a (for example, a VTM: voltage temperature monitoring). The battery pack 300b includes a battery module 200b and a battery module monitoring unit 301b. The battery pack 300c includes a battery module 200c and a battery module monitoring unit 301c. The battery packs 300a to 300c are battery packs similar to the above-described battery pack 300, and the battery modules 200a to 200c are battery modules similar to the above-described battery module 200. The battery modules 200a to 200c are electrically connected in series. The battery packs 300a, 300b, and 300c can each be independently removed, and can be exchanged by a different battery pack 300.

Each of the battery modules 200a to 200c includes a plurality of unit cells connected in series. At least one of the unit cells is the secondary battery according to the first approach. The battery modules 200a to 200c each perform charging and discharging via a positive electrode terminal 413 and a negative electrode terminal 414.

The battery management unit 411 performs communication with the battery module monitoring units 301a to 301c and collects information such as voltages and temperatures for each of the unit cells 100 included in the battery modules 200a to 200c included in the vehicle power source 41. In this manner, the battery management unit 411 collects information concerning security of the vehicle power source 41.

The battery management unit 411 and the battery module monitoring units 301a to 301c are connected via the communication bus 412. In the communication bus 412, a set of communication lines is shared at a plurality of nodes (he battery management unit 411 and one or more battery module monitoring units 301a to 301c). The communication bus 412 is, for example, a communication bus configured based on CAN (Control Area Network) standard.

The battery module monitoring units 301a to 301c measure a voltage and a temperature of each unit cell in the battery modules 200a to 200c based on commands from the battery management unit 411. It is possible, however, to measure the temperatures only at several points per battery module, and the temperatures of all of the unit cells need not be measured.

The vehicle power source 41 can also have an electromagnetic contactor (for example, a switch unit 415 shown in FIG. 9) for switching on and off electrical connection between the positive electrode terminal 413 and the negative electrode terminal 414. The switch unit 415 includes a precharge switch (not shown), which is turned on when the battery modules 200a to 200c are charged, and a main switch (not shown), which is turned on when output from the battery modules 200a to 200c is supplied to a load. The precharge switch and the main switch each include a relay circuit (not shown), which is switched on or off based on a signal supplied to a coil disposed near the switch elements. The electromagnetic contactor such as the switch unit 415 is controlled based on a control signal from the battery management unit 411 or the vehicle ECU 42, which controls the operation of the entire vehicle 400.

The inverter 44 converts an input direct current voltage to a three-phase alternate current (AC) high voltage for driving a motor. Three-phase output terminal(s) of the inverter 44 is (are) connected to each three-phase input terminal of the drive motor 45. The inverter 44 is controlled based on a control signal from the battery management unit 411 or the vehicle ECU 42, which controls the entire operation of the vehicle. Due to the inverter 44 being controlled, an output voltage from the inverter 44 is adjusted.

The drive motor 45 is rotated by an electric power supplied from the inverter 44. The drive force generated by rotation of the drive motor 45 is transferred to an axle and driving wheels W via a differential gear unit, for example.

The vehicle 400 also includes a regenerative brake mechanism (regenerator), though not shown. The regenerative brake mechanism rotates the drive motor 45 when the vehicle 400 is braked, and converts kinetic energy into regenerative energy as electric energy. The regenerative energy, recovered in the regenerative brake mechanism, is input into the inverter 44 and converted to direct current. The converted direct current is input into the vehicle power source 41.

One terminal of a connecting line L1 is connected to the negative electrode terminal 414 of the vehicle power source 41. The other terminal of the connecting line L1 is connected to a negative electrode input terminal 417 of the inverter 44. The connecting line L1 is provided with a current detector (current detecting circuit) 416 in the battery management unit 411 between the negative electrode terminal 414 and the negative electrode input terminal 417.

One terminal of a connecting line L2 is connected to the positive electrode terminal 413 of the vehicle power source 41. The other terminal of the connecting line L2 is connected to a positive electrode input terminal 418 of the inverter 44. The connecting line L2 is provided with the switch unit 415 between the positive electrode terminal 413 and the positive electrode input terminal 418.

The external terminal 43 is connected to the battery management unit 411. The external terminal 43 is able to connect, for example, to an external power source.

The vehicle ECU 42 performs cooperative control of the vehicle power source 41, the switch unit 415, the inverter 44, and the like, together with other management units and control units including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby performing the management of the whole vehicle 400. Data concerning the maintenance of the vehicle power source 41, such as a remaining capacity of the vehicle power source 41, are transferred between the battery management unit 411 and the vehicle ECU 42 via communication lines.

The vehicle according to the fourth approach has the battery pack according to the third approach installed therein. Since the charge and discharge cycle life of the battery pack is excellent, a vehicle with high reliability can be provided.

### Examples

Hereinafter, examples will be described, but the approaches are not limited to the examples described below.

### (Example 1)

### <Fabrication of Negative Electrode>

Nb₂O₅ particles and TiO₂ particles were mixed in a molar ratio of 1 : 1. The obtained powder was placed in an alumina crucible and heated at a temperature of 800°C for 10 hours. Thereafter, pulverization and mixing were performed, and preliminary firing was performed again at a temperature of 800°C for 10 hours to obtain precursor particles. Further, the obtained precursor particles were subjected to main firing at 1100°C for 5 hours to obtain a Nb₂TiO₇ (TNO) powder as a niobium-containing oxide.

The Nb₂TiO₂ (TNO) powder as a negative electrode active material, acetylene black (AB) and multi-walled carbon nanotubes (MWCNT) as a conductive agent, a carboxymethyl cellulose (CMC) sodium salt powder as a binder, and a styrene-butadiene rubber (SBR) dispersion as a binder were prepared. These materials were mixed in pure water as a solvent so as to have a ratio of 86 parts by mass of the TNO powder, 5 parts by mass of AB, 5 parts by mass of MWCNT, 2 parts by mass of the CMC sodium salt powder, and 2 parts by mass of SBR. The mixing was performed in the following order while stirring pure water. The CMC sodium salt was dissolved in pure water, and then a SBR dispersion was further mixed to obtain a dispersion. AB and MWCNT were dispersed in this dispersion, and finally, the TNO powder was dispersed. Thus, a negative electrode slurry was obtained. The negative electrode slurry was applied to both surfaces of a negative electrode current collector made of an aluminum foil having a thickness of 12 µm. Thereafter, the negative electrode slurry was dried and pressed to obtain a negative electrode. When the negative electrode was cut into a rectangular shape, the negative electrode was cut out such that a portion where a coating film was not formed on the negative electrode current collector was formed on one side of the rectangular shape. This portion was used as a negative electrode current collecting tab.

### <Fabrication of Positive Electrode>

As a positive electrode active material, 3 g of LiNi_{0.8}Co_{0.1}Mn_{0.1}O₂ (NCM) was prepared. Acetylene black (AB) was prepared as a conductive agent. In addition, a PVdF dispersion was prepared. As the PVdF dispersion, a dispersion in which PVdF as a binder was dispersed at a solid content of 8% in N-methyl-2-pyrrolidone (NMP) was prepared.

The above materials were mixed in a ratio of 90 parts by mass of NCM, 5 parts by mass of AB, and 5 parts by mass of PVdF so as to be dispersed in NMP as a solvent to prepare a positive electrode slurry. The positive electrode slurry was applied to both surfaces of a positive electrode current collector made of an aluminum foil having a thickness of 12 µm. Thereafter, the positive electrode slurry was dried and pressed to obtain a positive electrode. When the positive electrode was cut into a rectangular shape, the positive electrode was cut out such that a portion where a coating film was not formed on the positive electrode current collector was formed on one side of the rectangular shape. This portion was used as a positive electrode current collecting tab.

### <Fabrication of Electrode Group>

As a separator, a cellulose separator having a thickness of 15 µm was prepared. A negative electrode, a separator, a positive electrode, and a separator were stacked in this order to produce a stacked electrode group.

### <Preparation of Electrolyte>

Propylene carbonate (PC) as a cyclic carbonate and propyl propionate (PP) as a carboxylate ester were mixed at a mass ratio of PC : PP = 25 : 75 to obtain a mixed solvent. Lithium hexafluorophosphate (LiPF₆) as a lithium salt was dissolved in a mixed solvent so as to have a concentration of 1.2 mol/kg to prepare a liquid nonaqueous electrolyte.

### <Assembly of Battery Precursor>

The electrode group was housed in a pack made of a laminate film formed of an aluminum foil and polypropylene layers formed on both surfaces of the aluminum foil. Thereafter, the liquid nonaqueous electrolyte was injected into the laminate film pack in which the electrode group was housed. The laminate film pack was completely sealed by heat sealing to fabricate a battery precursor.

### <Initial Charging and Aging>

The battery precursor was charged at a battery voltage of 3.1 V and 0.2 C. The battery precursor having a battery voltage of 3.1 V was left in a thermostatic bath at 70°C for 24 hours to perform aging. Thus, a secondary battery was fabricated.

### (Example 2)

A secondary battery was fabricated in the same manner as in Example 1 except that the type of the niobium-containing oxide was changed to niobium pentoxide represented by Nb₂O₅.

### (Examples 3 and 4)

A secondary battery was fabricated in the same manner as in Example 1 except that the type of the carboxylate ester was changed as shown in Table 2.

### (Examples 5 and 6)

A secondary battery was fabricated in the same manner as in Example 1 except that the amount of the carboxylate ester was changed as shown in Table 2.

### (Example 7)

In preparation of the electrolyte, propylene carbonate (PC) and propyl propionate (PP) were mixed at a mass ratio of PC : PP = 25 : 75 to obtain a mixed solvent. LiPF₆ was dissolved in the mixed solvent so as to have a concentration of 0.86 mol/kg. A secondary battery was fabricated in the same manner as in Example 1 except for the above.

### (Example 8)

In preparation of the electrolyte, propylene carbonate (PC) and propyl propionate (PP) were mixed at a mass ratio of PC : PP = 25 : 75 to obtain a mixed solvent. LiPF₆ was dissolved in the mixed solvent so as to have a concentration of 1.6 mol/kg. A secondary battery was fabricated in the same manner as in Example 1 except for the above.

### (Example 9)

In preparation of the electrolyte, propylene carbonate (PC) and propyl propionate (PP) were mixed at a mass ratio of PC : PP = 25 : 75 to obtain a mixed solvent. LiPF₆ was dissolved in the mixed solvent so as to have a concentration of 0.74 mol/kg. A secondary battery was fabricated in the same manner as in Example 1 except for the above.

### (Example 10)

In preparation of the electrolyte, propylene carbonate (PC) and propyl propionate (PP) were mixed at a mass ratio of PC : PP = 25 : 75 to obtain a mixed solvent. LiPF₆ was dissolved in the mixed solvent so as to have a concentration of 2.2 mol/kg. A secondary battery was fabricated in the same manner as in Example 1 except for the above.

### (Example 11)

A secondary battery was fabricated in the same manner as in Example 1 except that the battery voltage during aging was changed to the value shown in Table 2.

### (Examples 12 and 13)

A secondary battery was fabricated in the same manner as in Example 1 except that the temperature during aging was changed to the value shown in Table 2.

### (Comparative Examples 1 to 3)

A secondary battery was fabricated in the same manner as in Example 1 except that the type of the carboxylate ester was changed as shown in Table 2.

### (Comparative Examples 4 and 5)

A secondary battery was fabricated in the same manner as in Example 1 except that the amount of the carboxylate ester was changed as shown in Table 2.

### (Comparative Example 6)

A secondary battery was fabricated in the same manner as in Example 1 except that the battery voltage during aging was changed to the value shown in Table 2.

### (Comparative Examples 7 and 8)

A secondary battery was fabricated in the same manner as in Example 1 except that the temperature during aging was changed to the value shown in Table 2.

### (HAXPES Analysis)

The negative electrodes included in the secondary batteries of Examples and Comparative Examples were subjected to HAXPES analysis by the method described above, and the ratios B/A and C/B were measured.

### (Test for Cycle Retention Rate at 60°C)

In a thermostatic bath at 60°C, the secondary battery was subjected to CCCV (Constant Current Constant Voltage) charging at a 1C rate, and then to CC (Constant Current) discharging at a 1C rate. The discharge capacity by the charging and discharging was measured. The CCCV charge and the CC discharging were regarded as one cycle and repeated 200 cycles. When the discharge capacity at the first cycle was denoted by C1 and the discharge capacity after 200 cycles was denoted by C200, C200/C1 was defined as a capacity retention rate after 200 cycles. Note that 1C refers to a current value at which the state of charge (SOC) of the battery reaches 0% in one hour in a case where the battery is discharged from a SOC of 100%.

The production conditions and measurement results of the secondary batteries of Examples and Comparative Examples are shown in Tables 2 to 4.

As the production conditions, the type of the negative electrode active material, the type of the carboxylate ester, the values of (r + 1) + r' and |(r + 1) - r'| of the carboxylate ester, the amount (mass%) of the carboxylate ester, Ml/Mc, the battery voltage during aging (V), and the aging temperature (°C) are shown. As the amount of the carboxylate ester, the content of the carboxylate ester with respect to the electrolyte excluding the lithium salt is shown in mass%.

As the measurement results, the ratio B/A and the ratio C/B obtained by HAXPES for the negative electrodes included in the secondary batteries of Examples and Comparative Examples, and the results of the test for the cycle retention rate at 60°C are shown.

**Table 2**

| | Type of negative electrode active material | Type of carboxylate ester | (r + 1) + r' | \|(r + 1) - r'\| |
|---|---|---|---|---|
| Example 1 | Nb₂TiO₇ | Propyl propionate | 6 | 0 |
| Example 2 | Nb₂O₅ | Propyl propionate | 6 | 0 |
| Example 3 | Nb₂TiO₇ | Butyl butanoate | 8 | 0 |
| Example 4 | Nb₂TiO₇ | Ethyl propionate | 5 | 1 |
| Example 5 | Nb₂TiO₇ | Propyl propionate | 6 | 0 |
| Example 6 | Nb₂TiO₇ | Propyl propionate | 6 | 0 |
| Example 7 | Nb₂TiO₇ | Propyl propionate | 6 | 0 |
| Example 8 | Nb₂TiO₇ | Propyl propionate | 6 | 0 |
| Example 9 | Nb₂TiO₇ | Propyl propionate | 6 | 0 |
| Example 10 | Nb₂TiO₇ | Propyl propionate | 6 | 0 |
| Example 11 | Nb₂TiO₇ | Propyl propionate | 6 | 0 |
| Example 12 | Nb₂TiO₇ | Propyl propionate | 6 | 0 |
| Example 13 | Nb₂TiO₇ | Propyl propionate | 6 | 0 |
| Comparative Example 1 | Nb₂TiO₇ | Ethyl acetate | 4 | 0 |
| Comparative Example 2 | Nb₂TiO₇ | Butyl pentanoate | 9 | 1 |
| Comparative Example 3 | Nb₂TiO₇ | Methyl propionate | 5 | 2 |
| Comparative Example 4 | Nb₂TiO₇ | Propyl propionate | 6 | 0 |
| Comparative Example 5 | Nb₂TiO₇ | Propyl propionate | 6 | 0 |
| Comparative Example 6 | Nb₂TiO₇ | Propyl propionate | 6 | 0 |
| Comparative Example 7 | Nb₂TiO₇ | Propyl propionate | 6 | 0 |
| Comparative Example 8 | Nb₂TiO₇ | Propyl propionate | 6 | 0 |

**Table 3**

| | Amount of carboxylate ester (mass%) | Ml/Mc | Battery voltage during aging (V) | Aging temperature (°C) |
|---|---|---|---|---|
| Example 1 | 75 | 0.19 | 3.1 | 70 |
| Example 2 | 75 | 0.19 | 3.1 | 70 |
| Example 3 | 75 | 0.23 | 3.1 | 70 |
| Example 4 | 75 | 0.16 | 3.1 | 70 |
| Example 5 | 70 | 0.2 | 3.1 | 70 |
| Example 6 | 95 | 0.15 | 3.1 | 70 |
| Example 7 | 75 | 0.1 | 3.1 | 70 |
| Example 8 | 75 | 0.25 | 3.1 | 70 |
| Example 9 | 75 | 0.09 | 3.1 | 70 |
| Example 10 | 75 | 0.35 | 3.1 | 70 |
| Example 11 | 75 | 0.19 | 2.9 | 70 |
| Example 12 | 75 | 0.19 | 3.1 | 60 |
| Example 13 | 75 | 0.19 | 3.1 | 80 |
| Comparative Example 1 | 75 | 0.14 | 3.1 | 70 |
| Comparative Example 2 | 75 | 0.25 | 3.1 | 70 |
| Comparative Example 3 | 75 | 0.14 | 3.1 | 70 |
| Comparative Example 4 | 60 | 0.23 | 3.1 | 70 |
| Comparative Example 5 | 98 | 0.14 | 3.1 | 70 |
| Comparative Example 6 | 75 | 0.19 | 2.7 | 70 |
| Comparative Example 7 | 75 | 0.19 | 3.1 | 55 |
| Comparative Example 8 | 75 | 0.19 | 3.1 | 90 |

**Table 4**

| | B/A | C/B | Cycle retention rate at 60°C |
|---|---|---|---|
| Example 1 | 2.6 | 0.07 | 0.94 |
| Example 2 | 2.7 | 0.07 | 0.92 |
| Example 3 | 3 | 0.05 | 0.97 |
| Example 4 | 2.2 | 0.11 | 0.92 |
| Example 5 | 2.1 | 0.11 | 0.91 |
| Example 6 | 3.2 | 0.05 | 0.98 |
| Example 7 | 2.2 | 0.11 | 0.93 |
| Example 8 | 3.5 | 0.08 | 0.95 |
| Example 9 | 1.7 | 0.12 | 0.92 |
| Example 10 | 3.7 | 0.05 | 0.93 |
| Example 11 | 1.5 | 0.12 | 0.91 |
| Example 12 | 1.1 | 0.14 | 0.91 |
| Example 13 | 3.8 | 0.04 | 0.92 |
| Comparative Example 1 | 1.7 | 0.12 | 0.81 |
| Comparative Example 2 | 3.4 | 0.07 | 0.81 |
| Comparative Example 3 | 2.2 | 0.1 | 0.78 |
| Comparative Example 4 | 1.9 | 0.13 | 0.77 |
| Comparative Example 5 | 3.4 | 0.08 | 0.81 |
| Comparative Example 6 | 0.9 | 0.15 | 0.76 |
| Comparative Example 7 | 0.9 | 0.14 | 0.74 |
| Comparative Example 8 | 4.5 | 0.03 | 0.71 |

Examples 1 to 13 were all superior to Comparative Examples 1 to 9 in the cycle retention rate at 60°C.

From Examples 1 and 2, it was revealed that the charge and discharge cycle life can be improved even when the type of the niobium-containing oxide is changed.

From Examples 1, 3, and 4, it was revealed that the charge and discharge cycle life can be improved even if the type of the first carboxylate ester is changed. However, among the examples in which the type of the carboxylate ester was changed, Comparative Examples 1 to 3 was inferior to Examples in the charge and discharge cycle life. Ethyl acetate contained in the secondary battery of Comparative Example 1 and butyl pentanoate contained in the secondary battery of Comparative Example 2 have a value of (r + 1) + r' outside the range of 5 or more and 8 or less. Methyl propionate contained in the secondary battery of Comparative Example 3 has a large value of |(r + 1) - r'| which is 2. Therefore, the carboxylate esters contained in Comparative Examples 1 to 3 do not correspond to the first carboxylate ester.

In addition, from Examples 1, 5, and 6 and Comparative Examples 4 and 5, it was revealed that the charge and discharge cycle life can be improved when the content of the first carboxylate ester is 70 mass% or more and 95 mass% or less with respect to 100 mass% of the electrolyte excluding the lithium salt.

Examples 1 and 7 to 10 are examples in which the ratio Ml/Mc of the amount Ml (mol) of the lithium salt contained in the electrolyte to the amount Mc (mol) of the carboxylate ester contained in the electrolyte is variously changed. By comparing these Examples, it was revealed that Examples 1, 7, 8, and 10 satisfying 0.1 ≤ Ml/Mc ≤ 0.4 have a particularly large effect of improving the charge and discharge cycle life.

From Examples 1 and 11 and Comparative Example 6, it was revealed that B/A tends to increase as the battery voltage during aging is increased. In addition, from Examples 1, 12, and 13 and Comparative Examples 7 and 8, it was revealed that B/A tends to increase as the temperature during aging is increased.

According to at least one of these approaches or Examples, a secondary battery is provided. The secondary battery includes a positive electrode, a negative electrode, and an electrolyte. The negative electrode contains a niobium-containing oxide. In hard X-ray photoelectron spectroscopy on the surface of the negative electrode, a ratio B/A of an area A in a range of 200 eV or more and 215 eV or less and an area B in a range of 680 eV or more and 695 eV or less is 1.1 or more and 4.3 or less. The electrolyte contains a lithium salt and a carboxylate ester represented by formula A.

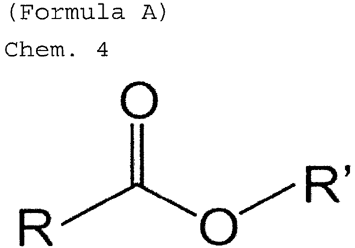

Each of R and R' contained in formula A is a hydrocarbon group. When the number of carbon atoms contained in R is represented by r and the number of carbon atoms contained in R' is represented by r', r and r' satisfy 5 ≤ (r + 1) + r' ≤ 8, and the value of |(r + 1) - r'| is 0 or 1. The content of the carboxylate ester is 70 mass% or more and 95 mass% or less with respect to 100 mass% of the electrolyte excluding the lithium salt. Therefore, a secondary battery having an excellent charge and discharge cycle life can be provided.

Hereinafter, the inventions according to the approaches will be additionally described.
<1> A secondary battery including a positive electrode, a negative electrode, and an electrolyte, in which
   the negative electrode contains a niobium-containing oxide,
   a ratio B/A of an area B in a range of 680 eV or more and 695 eV or less to an area A in a range of 200 eV or more and 215 eV or less in hard X-ray photoelectron spectroscopy on a surface of the negative electrode is 1.1 or more and 4.3 or less,
   the electrolyte contains a lithium salt and a carboxylate ester represented by formula A, 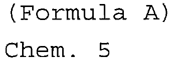 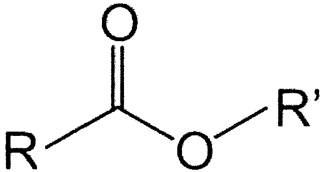
   each of R and R' contained in formula A is a hydrocarbon group,
   r and r' satisfy 5 ≤ (r + 1) + r' ≤ 8, and a value of |(r + 1) - r'| is 0 or 1 where a number of carbon atoms contained in R is r and a number of carbon atoms contained in R' is r', and
   a content of the carboxylate ester is 70 mass% or more and 95 mass% or less with respect to 100 mass% of the electrolyte excluding the lithium salt.
<2> The secondary battery according to clause <1>, in which an amount Ml (mol) of the lithium salt contained in the electrolyte and an amount Mc (mol) of the carboxylate ester contained in the electrolyte satisfy 0.1 ≤ Ml/Mc ≤ 0.4.
<3> The secondary battery according to clause <1> or clause <2>, in which a ratio C/B of an area C in a range of 290 eV or more and 295 eV or less to the area B in the hard X-ray photoelectron spectroscopy on the surface of the negative electrode is 0.2 or less.
<4> The secondary battery according to any one of clauses <1> to <3>, in which the niobium-containing oxide contains at least one compound selected from a group consisting of a compound represented by a general formula LiₓTi_{1-y}M1_{y}Nb_{2-z}M2_{z}O_{7+δ} and a compound represented by a general formula LiₓTi_{1-y}M3_{y+z}Nb_{2-z}O_{7-δ},
   M1 is at least one element selected from a group consisting of Zr, Si, and Sn, M2 is at least one element selected from a group consisting of V, Ta, Bi, K, Ca, B, Co, Fe, Mn, Ni, Si, P, and Mo, M3 is at least one element selected from a group consisting of Mg, Fe, Ni, Co, W, Ta, and Mo, x satisfies 0 ≤ x ≤ 5, y satisfies 0 ≤ y ≤ 1, z satisfies 0 ≤ z ≤ 0.5, and δ satisfies -0.3 ≤ δ ≤ 0.3.
<5> The secondary battery according to any one of clauses <1> to <4>, wherein the carboxylate ester contains at least one selected from a group consisting of propyl propionate, butyl butanoate, and ethyl propionate.
<6> The secondary battery according to to any one of clauses <1> to <5>, wherein the lithium salt contains a lithium salt containing a fluorine atom.
<7> The secondary battery according to clause <6>, wherein the lithium salt containing the fluorine atom contains at least one selected from a group consisting of lithium hexafluorophosphate, lithium bis(trifluoromethanesulfonyl)imide, lithium bis(fluorosulfonyl)imide, lithium bis(pentafluoroethylsulfonyl)imide, lithium tetrafluoroborate, lithium difluoro(oxalato)borate and lithium difluorophosphate.
<8> The secondary battery according to any one of clauses <1> to <7>, wherein the negative electrode contains a coating film containing a fluorine atom.
<9> A battery pack including the secondary battery according to any one of clauses <1> to <8>.
<10> The battery pack according to clause <9>, further including:
   an external power distribution terminal; and
   a protective circuit.
<11> The battery pack according to clause <9> or clause <10>, including a plurality of the secondary batteries, in which
   the secondary batteries are electrically connected in series, in parallel, or in a combination of in series and in parallel.
<12> A vehicle including the battery pack according to any one of clauses <9> to <11>.
<13> The vehicle according to clause <12>, including a mechanism configured to convert kinetic energy of the vehicle into regenerative energy.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

## Claims

1. A secondary battery (100) comprising a positive electrode (5), a negative electrode (3), and an electrolyte, wherein
the negative electrode (3) contains a niobium-containing oxide,
a ratio B/A of an area B in a range of 680 eV or more and 695 eV or less to an area A in a range of 200 eV or more and 215 eV or less in hard X-ray photoelectron spectroscopy on a surface of the negative electrode is 1.1 or more and 4.3 or less,
the electrolyte contains a lithium salt and a carboxylate ester represented by formula A, 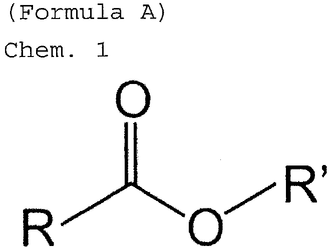
each of R and R' contained in formula A is a hydrocarbon group,
r and r' satisfy 5 ≤ (r + 1) + r' ≤ 8, and a value of |(r + 1) - r'| is 0 or 1 where a number of carbon atoms contained in R is r and a number of carbon atoms contained in R' is r', and
a content of the carboxylate ester is 70 mass% or more and 95 mass% or less with respect to 100 mass% of the electrolyte excluding the lithium salt.

2. The secondary battery (100) according to claim 1, wherein an amount Ml (mol) of the lithium salt contained in the electrolyte and an amount Mc (mol) of the carboxylate ester contained in the electrolyte satisfy 0.1 ≤ Ml/Mc ≤ 0.4.

3. The secondary battery (100) according to claim 1 or 2, wherein a ratio C/B of an area C in a range of 290 eV or more and 295 eV or less to the area B in the hard X-ray photoelectron spectroscopy on the surface of the negative electrode is 0.2 or less.

4. The secondary battery (100) according to any one of claims 1 to 3, wherein the niobium-containing oxide contains at least one compound selected from a group consisting of a compound represented by a general formula LiₓTi_{1-y}M1_{y}Nb_{2-z}M2_{z}O_{7+δ} and a compound represented by a general formula LiₓTi_{1-y}M3_{y+z}Nb_{2-z}O_{7-δ},
M1 is at least one element selected from a group consisting of Zr, Si, and Sn, M2 is at least one element selected from a group consisting of V, Ta, Bi, K, Ca, B, Co, Fe, Mn, Ni, Si, P, and Mo, M3 is at least one element selected from a group consisting of Mg, Fe, Ni, Co, W, Ta, and Mo, x satisfies 0 ≤ x ≤ 5, y satisfies 0 ≤ y ≤ 1, z satisfies 0 ≤ z ≤ 0.5, and δ satisfies -0.3 ≤ δ ≤ 0.3.

5. The secondary battery (100) according to any one of claims 1 to 4, wherein the carboxylate ester contains at least one selected from a group consisting of propyl propionate, butyl butanoate, and ethyl propionate.

6. The secondary battery (100) according to any one of claims 1 to 5, wherein the lithium salt contains a lithium salt containing a fluorine atom.

7. The secondary battery (100) according to claim 6, wherein the lithium salt containing the fluorine atom contains at least one selected from a group consisting of lithium hexafluorophosphate, lithium bis(trifluoromethanesulfonyl)imide, lithium bis(fluorosulfonyl)imide, lithium bis(pentafluoroethylsulfonyl)imide, lithium tetrafluoroborate, lithium difluoro(oxalato)borate and lithium difluorophosphate.

8. The secondary battery (100) according to any one of claims 1 to 7, wherein the negative electrode (3) contains a coating film containing a fluorine atom.

9. A battery pack (300) comprising the secondary battery (100) according to any one of claims 1 to 8.

10. The battery pack (300) according to claim 9, further comprising:
an external power distribution terminal (350); and
a protective circuit (346).

11. The battery pack (300) according to claim 9 or 10, comprising a plurality of the secondary batteries, wherein
the secondary batteries are electrically connected in series, in parallel, or in a combination of in series and in parallel.

12. A vehicle comprising the battery pack according to any one of claims 9 to 11.

13. The vehicle (400) according to claim 12, comprising a mechanism configured to convert kinetic energy of the vehicle into regenerative energy.
